# EUROPEAN PATENT SPECIFICATION

(11) **EP 4 513 397 B1**
(45) Date of publication and mention of the grant of the patent: **12.08.2026**
(21) Application number: 23200973.8
(22) Date of filing: 29.09.2023
(51) Int. Cl.: G06Q 10/0631

(54) **COLLABORATIVE UNIT COMMITMENT WITH INTEGRATED MACHINE-LEARNING**
KOLLABORATIVE EINHEITENEINBINDUNG MIT INTEGRIERTEM MASCHINENLERNEN
ENGAGEMENT D'UNITÉ COLLABORATIVE AVEC APPRENTISSAGE AUTOMATIQUE INTÉGRÉ

(30) Priority: 25.08.2023 US 202363534636 P
(43) Date of publication of application: 26.02.2025
(73) Proprietor: Hitachi Energy Ltd, 8050 Zürich (CH)
(72) Inventor: FENG, Xiaoming, Cary 27519 (US); POLAND, Jan, 5415 Nussbaumen (CH); SCHMITT, Susanne, 69115 Heidelberg (DE); HARJUNKOSKI, Iiro, 02200 Espoo (FI); GIUNTOLI, Marco, 64521 Groß-Gerau (DE)
(74) Representative: Vossius & Partner Patentanwälte Rechtsanwälte mbB

(56) References cited:
- WO-A1-2022/129631
- WO-A1-2022/136186
- US-A1- 2019 286 993
- US-A1- 2022 197 232

## Description

### BACKGROUND

### Field of the Invention

The embodiments described herein are generally directed to unit commitment (UC), and, more particularly, to collaboratively solving UC problems, potentially, with integrated machine learning.

### Description of the Related Art

Unit commitment (UC) refers to the process of scheduling power generation and demand. For example, unit commitment may comprise deciding when and which resource units (e.g., generating units) in a power system (e.g., power grid) to utilize (e.g., start up or shut down) for a given time period. Independent system operators (ISOs) use unit commitment to obtain generation resource and demand commitment and dispatch in a power grid. Unit commitment may determine a resource allocation schedule, comprising the commitment states and generation levels of all or a subset of electrical generators over the time period to be scheduled. This resource allocation schedule may schedule controllable demand, power flow controller set points, network configuration controls, and/or the like.

A UC problem refers to a mathematical optimization problem, in which power generation (e.g., a set of electrical generators) and demand (e.g., a set of loads) is coordinated in order to achieve an objective. Typically, the objective is to minimize the total generation cost, while satisfying one or more constraints (e.g., system-wide constraints, such as load balance and spinning reserve requirements, as well as operating constraints of the generation units).

Since a typical power grid is driven to operate near its security margin, security-related transmission constraints may be included in the formulation of the UC problem. Therefore, typical resource allocation scheduling involves security-constrained unit commitment (SCUC). The security constraints may include, for example, transmission-line thermal capacity constraints for the base case operating condition and contingent operating conditions. Security-constrained unit commitment is used in day-ahead, intra-day, and real-time resource allocation scheduling. Typically, the solution to an SCUC problem is the minimum-cost allocation schedule for generators, during the time period or time horizon to be scheduled, that satisfies all of the constraints (e.g., the operation constraints of each generator unit, the constraints of the electric network in the base-case network topology and operator specified contingency scenarios, etc.).

Currently, SCUC problems for power systems are primarily solved as a sequence of mixed integer programming (MIP) models or optimization runs. Integer programming refers to a mathematical optimization problem in which some or all of the variables are restricted to be integers. Mixed integer programming refers to integer programming in which some of the decision variables are continuous.

In a typical solution process, an initial UC problem is formulated as an MIP model, and then solved. To formulate the MIP model, several state-of-the-art techniques are used to linearize nonlinear relationships (e.g., generator price curves), formulate logical relationships (e.g., through the Big-M method), and/or the like. Next, a power flow and/or security analysis is performed, and power lines which are overloaded or would be overloaded by contingencies (e.g., predefined contingencies, N-1 contingencies, N-x contingencies, etc.) are identified as violations of the power flow and/or security. These violations are formulated as constraints (e.g., inequality constraints) and added to the MIP model, generally, as linear constraints, since the MIP model is based on a state-of-the-art linearization of the power flow equations. These constraints may be referred to as "active network constraints," even though they may become inactive during optimization. The resulting MIP model is referred to as a network-constrained UC (NCUC) problem, which is then solved using commercial MIP solvers. These steps are performed iteratively until all relevant contingencies have been added to the MIP model and no more violations are identified.
US 2019/286993 A1 discloses apparatus and methods for solving Mixed Integer Programming (MIP) problems, such as Security Constrained Unit Commitment (SCUC) problems used by power grid authorities to perform day-ahead market clearing. In certain examples, a plurality of threads of a software tool implementing a concurrent optimizer can be executed concurrently and sequentially to generate new solutions to a SCUC problem for an upcoming planning horizon. Data can be shared among the concurrently executing threads, such as intermediate/incumbent solutions and hints regarding the fixing of variables and constraints to reduce the size of the SCUC problem. In some examples, the threads are seeded with historical solutions from prior planning horizons. The software tool can select a best solution from the solutions generated by the threads, and determine dispatch instructions for a device coupled to the power grid for the upcoming planning horizon based at least in part on the selected solution.
WO 2022/136186 A1 discloses a method of operating a power grid including: generating, by a power management system of the power grid, an intermediate resource allocation schedule that provides a tentative schedule of resource allocation for power grid resources operating within the power grid; determining, by the power management system, whether the intermediate resource allocation schedule is feasible by checking whether the intermediate resource allocation schedule satisfies coupling constraints of a power grid resource allocation profile of the power grid indicative of an operation of the power grid constrained by power grid operational information; and in response to determining that the intermediate resource allocation schedule is infeasible, repairing, by the power management system, the intermediate resource allocation schedule to generate a feasible resource allocation schedule, where the repairing comprises determining whether a first dispatch solution obtained by solving a dispatch problem with fixed integer decisions from the intermediate resource allocation schedule is feasible.
US 2022/197232 A1 discloses a method of operating a power grid including: generating, by a power management system of the power grid, an intermediate resource allocation schedule that provides a tentative schedule of resource allocation for power grid resources operating within the power grid; determining, by the power management system, whether the intermediate resource allocation schedule is feasible by checking whether the intermediate resource allocation schedule satisfies coupling constraints of a power grid resource allocation profile of the power grid indicative of an operation of the power grid constrained by power grid operational information; and in response to determining that the intermediate resource allocation schedule is infeasible, repairing, by the power management system, the intermediate resource allocation schedule to generate a feasible resource allocation schedule, where the repairing comprises determining whether a first dispatch solution obtained by solving a dispatch problem with fixed integer decisions from the intermediate resource allocation schedule is feasible.

The present disclosure is directed toward overcoming one or more of the problems discovered by the inventors.

### SUMMARY

Systems, methods, and non-transitory computer-readable media are disclosed for collaboratively solving UC problems, potentially, with integrated machine learning.

In an embodiment, a method comprises using at least one hardware processor to: execute a solution process comprising generating one or more original mixed integer programming (MIP) models, wherein each of the one or more original MIP models represents an equivalent of a unit commitment (UC) problem for resources in a power system, and wherein the UC problem has a first solution space, generating one or more restricted MIP models, wherein each of the one or more restricted MIP models represents a restricted variant of the UC problem, having a second solution space that is smaller than the first solution space, begin solving the one or more original MIP models and the one or more restricted MIP models using a plurality of solvers, wherein, during the solving, execution of a solver for at least one of the one or more restricted MIP models overlaps in time with execution of a solver for at least one of the one or more original MIP models, monitoring a difference between an upper bound and a lower bound of a plurality of solutions produced during the solving, and when the difference satisfies a threshold, stopping the solving; and generate a resource allocation schedule for one or more of the resources in the power system based on a result of the solution process.

The method may further comprise using the at least one hardware processor to control the one or more resources in the power system according to the resource allocation schedule. The one or more resources may comprise at least one power generator, wherein the resource allocation schedule comprises an amount of power to be output by the at least one power generator for at least one time period, and wherein controlling the one or more resources comprises controlling the at least one power generator to output the amount of power during the at least one time period.

The one or more original MIP models and the one or more restricted MIP models may be mixed integer linear programming (MILP) models.

The one or more original MIP models may be a plurality of original MIP models, wherein each of the plurality of original MIP models has a different initial configuration than each of the other plurality of original MIP models. The one or more restricted MIP models may be a plurality of restricted MIP models, wherein each of the plurality of restricted MIP models has a different initial configuration than each of the other plurality of restricted MIP models.

The solution process may further comprise one or more relaxed MIP models, wherein each of the one or more relaxed MIP models represents a relaxed variant of the UC problem, having a third solution space that is larger than the first solution space. The UC problem may comprise one or more constraints, wherein, during solving, a solution for each of the one or more original MIP models is not allowed to violate any of the one or more constraints, but a solution for each of the one or more relaxed MIP models is allowed to violate at least one of the one or more constraints. During the solving, execution of a solver for at least one of the one or more relaxed MIP models may overlap in time with execution of a solver for at least one of the one or more original MIP models or at least one of the one or more restricted MIP models. The upper bound may be determined from solutions for the one or more original MIP models and the one or more restricted MIP models, and the lower bound may be determined from solutions for the one or more relaxed MIP models.

Generating the one or more restricted MIP models may comprise, for at least one of the one or more restricted MIP models: extracting values of one or more features from the UC problem; applying a machine-learning model to the values of the one or more features to determine a partial solution to the UC problem; and generating the at least one restricted MIP model to incorporate the partial solution. The method may further comprise using the at least one hardware processor to, before executing the solution process, training the machine-learning model to determine partial solutions based on the one or more features using supervised learning.

The method may further comprise using the at least one hardware processor to: extract values of one or more features from the UC problem; and apply a machine-learning model to the values of the one or more features to determine values of one or more search parameters, wherein at least one of the plurality of solvers utilizes a search strategy at least partially defined by the values of the one or more search parameters. The method may further comprise using the at least one hardware processor to, before executing the solution process, training the machine-learning model to determine the one or more search parameters based on the one or more features using supervised learning. The one or more search parameters may indicate at least one of a branching strategy, diving strategy, or cutting strategy. The one or more search parameters may define one or more probabilities for the at least one of the branching strategy, diving strategy, or cutting strategy.

The method may further comprise using the at least one hardware processor to: receive a security-constrained UC problem; generate a plurality of network-constrained UC problems from the security-constrained UC problem; and execute the solution process for each of the plurality of network-constrained UC problems. The method may further comprise using the at least one hardware processor to, for at least one of the plurality of network-constrained UC problems: extract values of one or more features from one or both of the security-constrained UC problem or the at least one network-constrained UC problem; apply a machine-learning model to the values of the one or more features to determine a configuration for the at least one network-constrained UC problem; and prior to executing the solution process for the at least one network-constrained UC problem, configure the at least one network-constrained UC problem according to the configuration. The method may further comprise using the at least one hardware processor to, before executing the solution process for the at least one network-constrained UC problem, training the machine-learning model to determine the configuration based on the one or more features using supervised learning.

It should be understood that any of the features in the methods above may be implemented individually or with any subset of the other features in any combination. Thus, to the extent that the appended claims would suggest particular dependencies between features, disclosed embodiments are not limited to these particular dependencies. Rather, any of the features described herein may be combined with any other feature described herein, or implemented without any one or more other features described herein, in any combination of features whatsoever. In addition, any of the methods, described above and elsewhere herein, may be embodied, individually or in any combination, in executable software modules of a processor-based system, such as a server, and/or in executable instructions stored in a non-transitory computer-readable medium.

### BRIEF DESCRIPTION OF THE DRAWINGS

The details of the present invention, both as to its structure and operation, may be gleaned in part by study of the accompanying drawings, in which like reference numerals refer to like parts, and in which:
FIG. 1 illustrates an example infrastructure, in which any of the processes described herein may be implemented, according to an embodiment;
FIG. 2 illustrates an example processing system, by which any of the processes described herein may be executed, according to an embodiment;
FIG. 3 illustrates an example data flow for managing a power system, according to an embodiment;
FIG. 4 illustrates an example architecture for solving a UC problem, according to an embodiment;
FIG. 5 illustrates a process for solving an SCUC problem, or other overarching UC problem that would benefit from solving a plurality of UC problems, according to an embodiment;
FIG. 6 illustrates a process for solving a UC problem, according to an embodiment; and
FIG. 7 illustrates an example time series for solving a UC problem, according to an embodiment.

### DETAILED DESCRIPTION

In an embodiment, systems, methods, and non-transitory computer-readable media are disclosed for collaboratively solving UC problems, and in some embodiments, with integrated machine learning. After reading this description, it will become apparent to one skilled in the art how to implement the invention in various alternative embodiments and alternative applications. However, although various embodiments of the present invention will be described herein, it is understood that these embodiments are presented by way of example and illustration only, and not limitation. As such, this detailed description of various embodiments should not be construed to limit the scope or breadth of the present invention as set forth in the appended claims.

### 1. Introduction

One advantage of formulating and solving a UC problem as an MIP model is duality. State-of-the-art MIP solvers provide dual bounds, in addition to good, close-to-optimal, or even globally optimal solutions. Dual bounds refer to the guaranteed upper and lower bounds on the objective value of the MIP model. U.S. Patent Pub. No. 2021/0334911, published on October 28, 2021, which is hereby incorporated herein by reference as if set forth in full, describes an example of how these dual bounds may be used terminate the solution process.

For ease of description, it will be assumed herein that the objective value of the MIP model represents a cost to be minimized. For example, the cost to be minimized may be the cost of electricity from an electricity market. However, the MIP model could be alternatively formulated with a different objective and/or an objective value to be maximized. In the case of maximization, it should be understood that the roles and sources of the upper and lower bounds may be the reverse of what are described herein.

Solving MIP models to optimality or near optimality is time-consuming. This is especially true for SCUC problems. However, there are several heuristic approaches that can quickly produce feasible solutions in certain circumstances. Common heuristics include: fixed rules for setting certain decision variables; dynamic programming (which is rarely used for large-scale SCUC problems); heuristics based on linear programming (LP) relaxations of the MIP model; and heuristics derived from machine learning.

Heuristics can be classified into two general types. Type I heuristics are those that only affect the search path during the solution process, without affecting the final solution to the problem. Type I heuristics include branching strategies, relaxation-induced neighborhood search, and the like, which tend to be used in commercial MIP solvers. Type II heuristics involve restricted variants of the original problem.

With the exception of simple problems, it is not currently possible to build heuristics that robustly generate optimal or even feasible solutions to SCUC problems. Hence, the state-of-the-art is to generate partial solutions (i.e., assignments of only a subset of the decision variables) of SCUC problems. However, in the context of SCUC problems, heuristics have at least the following limitations: generating full feasible solutions is difficult or impossible; even if a feasible solution was obtained using Type II heuristics, it would only be an upper bound of the solution; generation of the best partial solution is not straightforward, since it is not clear what the best partial solution is; there is no recourse when the partial solution is infeasible; there is no guarantee of optimality or the correct lower bound when heuristically generating partial solutions; a heuristic may perform well in many cases, but may deteriorate in terms of solution time, robustness, and/or solution quality in the remaining cases; each version of the UC model is solved in isolation without the benefit of information from the solution process for other versions of the UC model; and there is no recourse to continue a search for a solution to a restricted problem when the proposed solution is infeasible. Disclosed embodiments may overcome one or more, including potentially all, of the above limitations.

### 2. Infrastructure

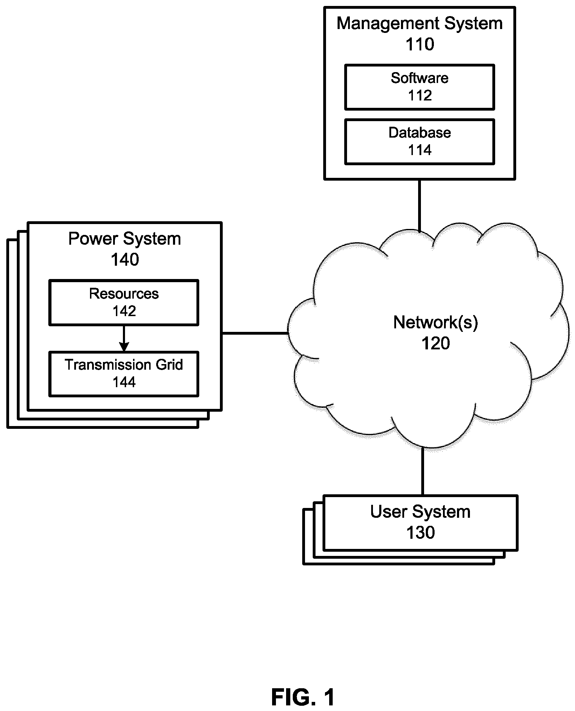

FIG. 1 illustrates an example infrastructure in which any of the disclosed processes may be implemented, according to an embodiment. The infrastructure may comprise a management system 110 (e.g., comprising one or more servers) which hosts and/or executes one or more of the various functions, processes, methods, and/or software described herein. Examples of management system 110 include, without limitation, a supervisory control and data acquisition (SCADA) system, a power management system (PMS), an energy management system (EMS), a distribution management system (DMS), an advanced DMS (ADMS), and the like. Management system 110 may comprise dedicated servers, or may instead be implemented in a computing cloud, in which the computational resources of one or more servers are dynamically and elastically allocated to multiple tenants based on demand. In either case, the servers may be collocated (e.g., in a single data center) and/or geographically distributed (e.g., across a plurality of data centers). Management system 110 may also comprise or be communicatively connected to software 112 and/or a database 114. In addition, management system 110 may be communicatively connected to one or more user systems 130 and/or power systems 140 (e.g., power grids) via one or more networks 120.

Network(s) 120 may comprise the Internet, and management system 110 may communicate with user system(s) 130 and/or power system(s) 140 through the Internet using standard transmission protocols, such as HyperText Transfer Protocol (HTTP), HTTP Secure (HTTPS), File Transfer Protocol (FTP), FTP Secure (FTPS), Secure Shell FTP (SFTP), eXtensible Messaging and Presence Protocol (XMPP), Open Field Message Bus (OpenFMB), IEEE Smart Energy Profile Application Protocol (IEEE 2030.5), and the like, as well as proprietary protocols. While management system 110 is illustrated as being connected to various systems through a single set of network(s) 120, it should be understood that management system 110 may be connected to the various systems via different sets of one or more networks. For example, management system 110 may be connected to a subset of user systems 130 and/or power systems 140 via the Internet, but may be connected to one or more other user systems 130 and/or power systems 140 via an intranet. Furthermore, while only a few user systems 130 and power systems 140, one instance of software 112, and one database 114 are illustrated, it should be understood that the infrastructure may comprise any number of user systems, power systems, software instances, and databases.

User system(s) 130 may comprise any type or types of computing devices capable of wired and/or wireless communication, including without limitation, desktop computers, laptop computers, tablet computers, smart phones or other mobile phones, servers, game consoles, televisions, set-top boxes, electronic kiosks, point-of-sale terminals, embedded controllers, programmable logic controllers (PLCs), and/or the like. However, it is generally contemplated that user system(s) 130 would comprise personal computers, mobile devices, or workstations by which agents of an operator of a power system 140 can interact with management system 110. These interactions may comprise inputting data (e.g., parameters for configuring the processes described herein) and/or receiving data (e.g., the outputs of processes described herein) via a graphical user interface provided by management system 110 or a system between management system 110 and user system(s) 130. The graphical user interface may comprise screens (e.g., webpages) that include a combination of content and elements, such as text, images, videos, animations, references (e.g., hyperlinks), frames, inputs (e.g., textboxes, text areas, checkboxes, radio buttons, drop-down menus, buttons, forms, etc.), scripts (e.g., JavaScript), and the like, including elements comprising or derived from data stored in database 114.

Power system 140 may comprise one or more, and generally a plurality of, power resources 142, which may supply power to a transmission grid 144. Resources 142 may comprise power generators, energy storage systems, loads (e.g., rechargeable energy storage system or other controllable load, and/or non-controllable loads), and/or the like. Resources 142 may comprise different types of power generators, such as thermal power plants (e.g., coal, natural gas, nuclear, geothermal, etc.), hydroelectric power plants, renewable resource power plants (e.g., solar, wind, geothermal, etc.), and/or the like. Each resource 142 may be subject to complex technical constraints and/or business constraints, such as a minimum up-time, a maximum down-time, a ramp-up and/or ramp-down rate, a modulation or stability (e.g., a unit may not change its production level too many times or at too fast of a rate), a start-up and/or shut-down ramp rate (e.g., when starting or stopping, a unit must follow a specific power curve, which may depend on how long the unit has been offline or online), and/or the like.

Transmission grid 144 comprises the electrical grid that delivers electricity, generated by resources 142, to consumers. Transmission grid 144 may be an interconnected network that spans a geographical region (e.g., a facility, city, state, country, etc.). Transmission grid 144 has complex characteristics, such as network topology, device equipment parameters, line flow limits, resource response rates, and/or the like, that may be relevant to security-constrained unit commitment.

Management system 110 may execute software 112, comprising one or more software modules that implement one or more of the disclosed processes. In addition, management system 110 may comprise, be communicatively coupled with, or otherwise have access to database 114 that stores the data input into and/or output from one or more of the disclosed processes. Any suitable database may be utilized in database 114, including without limitation MySQL^{™}, Oracle^{™}, IBM^{™}, Microsoft SQL^{™}, Access^{™}, PostgreSQL^{™}, and/or the like, and including cloud-based databases, proprietary databases, and unstructured databases.

### 3. Example Processing Device

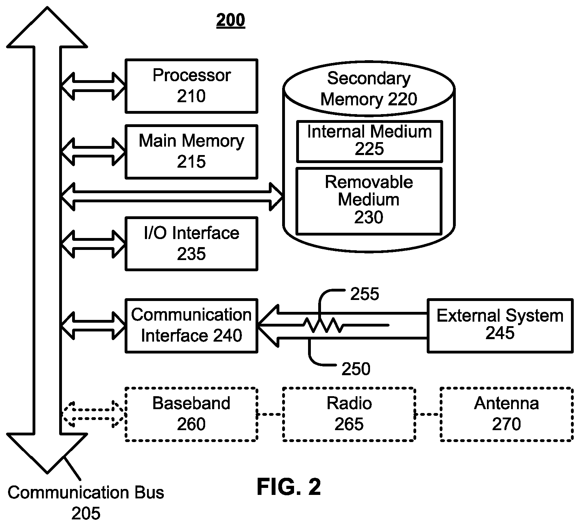

FIG. 2 is a block diagram illustrating an example wired or wireless system 200 that may be used in connection with various embodiments described herein. For example, system 200 may be used as or in conjunction with one or more of the functions, processes, or methods (e.g., to store and/or execute software 112) described herein, and may represent components of management system 110, user system(s) 130, power system(s) 140, and/or other processing devices described herein. System 200 can be a server or any conventional personal computer, or any other processor-enabled device that is capable of wired or wireless data communication. Other computer systems and/or architectures may be also used, as will be clear to those skilled in the art.

System 200 preferably includes one or more processors 210. Processor(s) 210 may comprise a central processing unit (CPU). Additional processors may be provided, such as a graphics processing unit (GPU), an auxiliary processor to manage input/output, an auxiliary processor to perform floating-point mathematical operations, a special-purpose microprocessor having an architecture suitable for fast execution of signal-processing algorithms (e.g., digital-signal processor), a processor subordinate to the main processor (e.g., back-end processor), an additional microprocessor or controller for dual or multiple processor systems, and/or a coprocessor. Such auxiliary processors may be discrete processors or may be integrated with a main processor 210. Examples of processors which may be used with system 200 include, without limitation, any of the processors (e.g., Pentium^{™}, Core 17^{™}, Xeon^{™}, etc.) available from Intel Corporation of Santa Clara, California, any of the processors available from Advanced Micro Devices, Incorporated (AMD) of Santa Clara, California, any of the processors (e.g., A series, M series, etc.) available from Apple Inc. of Cupertino, any of the processors (e.g., Exynos^{™}) available from Samsung Electronics Co., Ltd., of Seoul, South Korea, and/or the like.

Processor 210 is preferably connected to a communication bus 205. Communication bus 205 may include a data channel for facilitating information transfer between storage and other peripheral components of system 200. Furthermore, communication bus 205 may provide a set of signals used for communication with processor 210, including a data bus, address bus, and/or control bus (not shown). Communication bus 205 may comprise any standard or non-standard bus architecture such as, for example, bus architectures compliant with industry standard architecture (ISA), extended industry standard architecture (EISA), Micro Channel Architecture (MCA), peripheral component interconnect (PCI) local bus, standards promulgated by the Institute of Electrical and Electronics Engineers (IEEE) including IEEE 488 general-purpose interface bus (GPIB), IEEE 696/S-100, and/or the like.

System 200 may comprise a main memory 215. Main memory 215 provides storage of instructions and data for programs executing on processor 210, such as one or more of the functions and/or software modules discussed herein (e.g., software 112). It should be understood that programs stored in the memory and executed by processor 210 may be written and/or compiled according to any suitable language, including without limitation C/C++, Java, JavaScript, Perl, Python, Visual Basic, .NET, and the like. Main memory 215 is typically semiconductor-based memory such as dynamic random access memory (DRAM) and/or static random access memory (SRAM). Other semiconductor-based memory types include, for example, synchronous dynamic random access memory (SDRAM), Rambus dynamic random access memory (RDRAM), ferroelectric random access memory (FRAM), and the like, including read only memory (ROM).

System 200 may also comprise a secondary memory 220. Secondary memory 220 may optionally include an internal medium 225 and/or a removable medium 230. Internal medium 225 may comprise, for example, a hard disk drive (HDD), a solid state drive (SSD), and/or the like. Removable medium 230 may comprise, for example, a magnetic tape drive, a compact disc (CD) drive, a digital versatile disc (DVD) drive, a flash memory drive, and/or the like. Secondary memory 220 is a non-transitory computer-readable medium having computer-executable code (e.g., software 112) and/or other data stored thereon. The computer software or data stored on secondary memory 220 is read into main memory 215 for execution by processor 210.

System 200 may comprise an input/output (I/O) interface 235. I/O interface 235 provides an interface between one or more components of system 200 and one or more input and/or output devices. Example input devices include, without limitation, sensors, keyboards, touch screens or other touch-sensitive devices, cameras, biometric sensing devices, computer mice, trackballs, pen-based pointing devices, and/or the like. Examples of output devices include, without limitation, other processing devices, cathode ray tubes (CRTs), plasma displays, light-emitting diode (LED) displays, liquid crystal displays (LCDs), printers, vacuum fluorescent displays (VFDs), surface-conduction electron-emitter displays (SEDs), field emission displays (FEDs), and/or the like. In some cases, an input and output device may be combined, such as in the case of a touch panel display (e.g., in a smartphone, tablet, or other mobile device).

System 200 may comprise a communication interface 240. Communication interface 240 allows software and other data to be transferred between system 200 and external devices (e.g. printers), networks, or other external systems 245. For example, data, which may include computer software or executable code, may be transferred to system 200 from external system 245 (e.g., a network server) and/or from system 200 to external system 245, via communication interface 240. Examples of communication interface 240 include a built-in network adapter, network interface card (NIC), Personal Computer Memory Card International Association (PCMCIA) network card, card bus network adapter, wireless network adapter, Universal Serial Bus (USB) network adapter, modem, a wireless data card, a communications port, an infrared interface, an IEEE 1394 fire-wire, and any other device capable of interfacing system 200 with a network (e.g., network(s) 120) or another computing device. Communication interface 240 preferably implements industry-promulgated protocol standards, such as Ethernet IEEE 802 standards, Fiber Channel, digital subscriber line (DSL), asynchronous digital subscriber line (ADSL), frame relay, asynchronous transfer mode (ATM), integrated digital services network (ISDN), personal communications services (PCS), transmission control protocol/Internet protocol (TCP/IP), serial line Internet protocol/point to point protocol (SLIP/PPP), and so on, but may also implement customized or non-standard interface protocols as well.

Data transferred via communication interface 240 are generally in the form of electrical communication signals 255. These signals 255 may be provided to communication interface 240 via a communication channel 250. In an embodiment, communication channel 250 may be a wired or wireless network (e.g., network(s) 120), or any variety of other communication links. Communication channel 250 carries signals 255 and can be implemented using a variety of wired or wireless communication means including wire or cable, fiber optics, conventional phone line, cellular phone link, wireless data communication link, radio frequency ("RF") link, or infrared link, just to name a few.

Computer-executable code (e.g., computer programs, such as software 112) is stored in main memory 215 and/or secondary memory 220. Computer programs can also be received via communication interface 240 and stored in main memory 215 and/or secondary memory 220. Such computer programs, when executed, enable system 200 to perform the various functions of the disclosed embodiments, as described elsewhere herein.

In this description, the term "computer-readable medium" is used to refer to any non-transitory computer-readable storage media used to provide computer-executable code and/or other data to or within system 200. Examples of such media include main memory 215, secondary memory 220 (including internal memory 225 and/or removable medium 230), and any peripheral device communicatively coupled with communication interface 240, such as external system 245 (e.g., a network information server or other network device). These non-transitory computer-readable media are means for providing executable code, programming instructions, software, and/or other data to processor(s) 210.

System 200 may also include optional wireless communication components that facilitate wireless communication over a voice network and/or a data network (e.g., in the case of user system 130 that is a smart phone or other mobile device). The wireless communication components comprise an antenna system 270, a radio system 265, and a baseband system 260. In system 200, radio frequency (RF) signals are transmitted and received over the air by antenna system 270 under the management of radio system 265.

In an embodiment, antenna system 270 may comprise one or more antennae and one or more multiplexors (not shown) that perform a switching function to provide antenna system 270 with transmit and receive signal paths. In the receive path, received RF signals can be coupled from a multiplexor to a low noise amplifier (not shown) that amplifies the received RF signal and sends the amplified signal to radio system 265.

In an alternative embodiment, radio system 265 may comprise one or more radios that are configured to communicate over various frequencies. In an embodiment, radio system 265 may combine a demodulator (not shown) and modulator (not shown) in one integrated circuit (IC). The demodulator and modulator can also be separate components. In the incoming path, the demodulator strips away the RF carrier signal leaving a baseband receive audio signal, which is sent from radio system 265 to baseband system 260.

Baseband system 260 is also communicatively coupled with processor(s) 210, which may have access to data storage areas 215 and 220. Thus, data, including computer programs, can be received from baseband processor 260 and stored in main memory 210 or in secondary memory 220, or executed upon receipt. Such computer programs, when executed, may enable system 200 to perform the various functions of the disclosed embodiments.

### 4. Example Data Flow for Power System Management

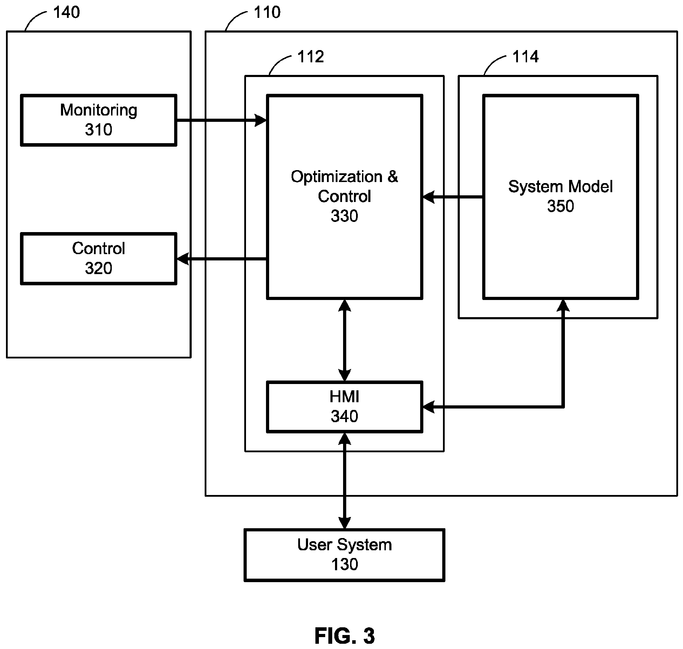

FIG. 3 illustrates an example data flow between a management system 110, a user system 130, and a power system 140 to be managed, according to an embodiment. Power system 140 may comprise a monitoring module 310 and a control module 320. Software 112 of management system 110 may comprise an optimization and control module 330, and a human-to-machine interface (HMI) 340. Database 114 of management system 110 may store a system model 350. It should be understood that communications between the various systems may be performed via network(s) 120. In addition, communications between a pair of modules may be performed via an application programming interface (API) provided by one of the modules.

Monitoring module 310 may monitor and collect data that are output by one or more sensors in the network of power system 140. Monitoring module 310 may also derive data from the collected data. Monitoring module 310 may transmit or "push" the collected and/or derived data as system telemetry to optimization and control module 330 (e.g., via an API of optimization and control module 330). Alternatively, optimization and control module 330 may retrieve or "pull" the system telemetry from monitoring module 310 (e.g., via an API of monitoring module 310). The system telemetry may include measurements at each of one or more nodes or other points within the network of power system 140. The system telemetry may be communicated from monitoring module 310 to optimization and control module 330 in real time, as data are collected and/or derived, or periodically. As used herein, the term "real time" includes events that occur simultaneously, as well as events that are separated in time by ordinary delays resulting from latencies in processing, memory access, communications, and/or the like.

Optimization and control module 330 receives the system telemetry from monitoring module 310, and uses the system telemetry in conjunction with system model 350 to determine an optimal configuration for one or more resources 142 of power system 140, and then control power system 140 to transition to the optimal configuration. In particular, optimization and control module 330 may generate control signals that are transmitted to control module 320 of power system 140. For example, the control signals may be sent via an API of control module 320. The control signals may be communicated from optimization and control module 330 of management system 110 to control module 320 of power system 140 in real time, as the system telemetry is received and analyzed, periodically (e.g., in advance of a sliding optimization window), or in response to a user operation. Optimization and control module 330 may control power system 140 automatically (e.g., without any user intervention), semi-automatically (e.g., requiring user approval or confirmation), and/or in response to manual user inputs.

The optimal configuration may comprise a resource allocation schedule. In this case, optimization and control module 330 may control one or more components, including resources 142, in power system 140 according to the resource allocation schedule. For instance, the resource allocation schedule may specify which resources 142 in power system 140 to utilize during specific time periods, how much of each resource 142 in power system 140 to utilize during specific time periods, and/or the like. As an example, resources 142 may comprise one or more power generators, the resource allocation schedule may comprise an amount of power to be output by each of the power generator(s) for at least one time period, and the power generator(s) may be controlled to output the associated amount of power for each power generator during the associated time period(s).

Optimization and control module 330 may perform one or more types of analysis, such as optimal power flow, distributed energy resource (DER) management, contingency analysis, Volt-Var optimization, and/or the like. The analysis may be performed in response to a user operation, or automatically in real time or periodically. In some cases, the analysis may be provided to a user via human-to-machine interface 340. In other cases, optimization and control module 330 may, automatically (i.e., without user intervention) or semi-automatically (e.g., with user approval or confirmation), initiate a control operation based on the analysis. Initiation of the control operation may comprise transmitting control commands to control module 320 of power system 140, which may responsively control power system 140 according to the control commands.

Control module 320 of power system 140 receives the control signals from optimization and control module 330, and controls one or more components of power system 140 in accordance with the control signals. Examples of such control include, setting a setpoint (e.g., for real and/or reactive power for distributed energy resources), adjusting the power output of a power generator, adjusting the charging or discharging of an energy storage system, adjusting the power input to a load, closing or opening a switch (e.g., circuit breaker), and/or the like.

Human-to-machine interface 340 may generate a graphical user interface that is transmitted to user system 130 and receive inputs to the graphical user interface via user system 130. The graphical user interface may provide information regarding the state of power system 140 determined from the system telemetry, an optimal configuration of power system 140 (e.g., resource allocation schedule) determined by optimization and control module 330, a control decision or recommendation determined by optimization and control module 330, a visual representation of system model 350, and/or the like. In addition, the graphical user interface may provide inputs that enable a user of user system 130 to configure settings of optimization and control module 330, configure system model 350, specify or approve controls to be transmitted to control module 320 of power system 140, analyze power system 140, and/or the like.

System model 350 may be stored in database 114 and accessed by modules, such as optimization and control module 330, via any known means (e.g., via an API of database 114, a direct query of database 114, etc.). Database 114 may store a system model 350 for each power system 140 that is managed by management system 110. Each system model 350 may model the network of power system 140 in any suitable manner. For example, system model 350 may comprise a single-line diagram representing the components of the network and their relationships to each other. It should be understood that the single-line diagram may be implemented as a data structure that is capable of being automatically analyzed by software modules, including optimization and control module 330.

### 5. Example Architecture for Solving

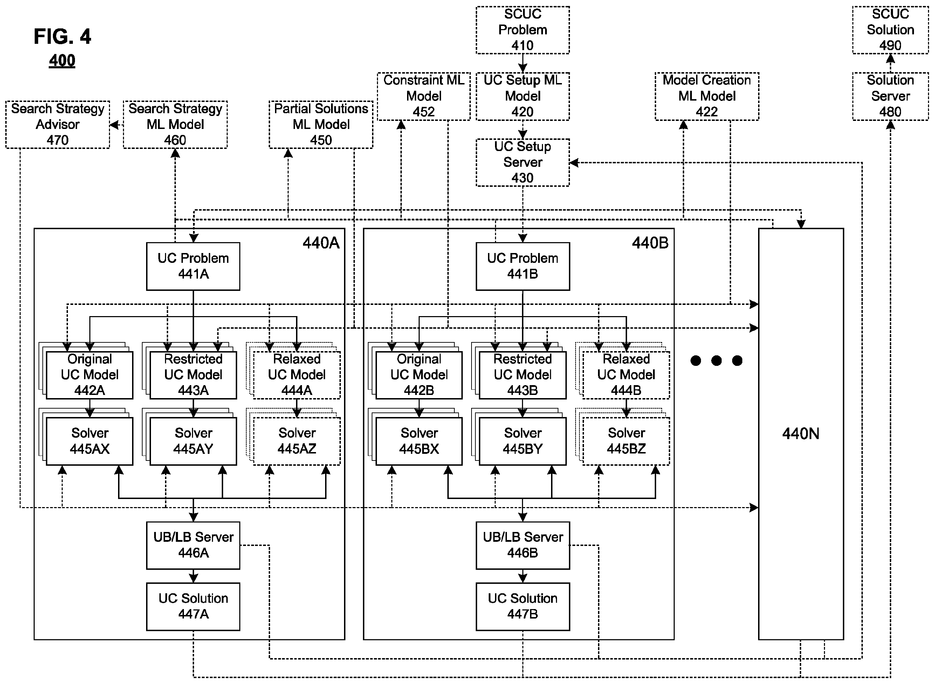

FIG. 4 illustrates an example architecture 400 for solving a UC problem, according to an embodiment. Components illustrated in dotted lines in architecture 400 are explicitly optional components. However, any component, even if illustrated in solid lines, should be understood to be optional. Those components, illustrated in solid lines, merely represent one core embodiment that may achieve key benefits described herein. Regardless of the constituent components, architecture 400 may be implemented by software 112.

Disclosed embodiments may be used to solve an SCUC problem 410, which may be received by software 112. Software 112 may provide SCUC problem 410 to a UC setup machine-learning (ML) model 420. In particular, software 112 may extract the values of one or more features from SCUC problem 410. UC setup ML model 420 may be applied to these values to determine a configuration for at least one initial UC problem. The initial UC problem(s) may then be configured by a UC setup server 430, according to the determined configuration, to produce one or more UC problems 441 to be solved within respective solution processes 440.

Prior to being applied, UC setup ML model 420 may be trained to determine a configuration for UC problems 441 based on the feature(s) using supervised learning. For example, during a training phase, UC setup ML model 420 may learn to predict configurations for UC problems 441 based on a training dataset that comprises values for the feature(s), derived from historical data and labeled with the configuration of the UC problems 441 that produced the optimal solution. UC setup ML model 420 may comprise any suitable algorithm, including, for example, a regression algorithm (e.g., linear or logistic regression), a naive Bayesian algorithm, an artificial neural network, a random forest algorithm, or the like.

UC problems 441 are primarily described herein as NCUC problems. However, it should be understood that UC problems 441 do not have to be network-constrained, and that there does not have to be an overarching SCUC problem 410 to be solved. In other words, an embodiment may consist of a single UC problem 441 to be solved in a single solution process 440. In this case, the single UC problem 441 may still be configured by UC setup server 430, according to a configuration output by UC setup ML model 420. In particular, software 112 may extract the value(s) of one or more feature(s) from UC problem 441, and apply UC setup ML model 420 to these value(s) to determine a configuration for the UC problem 441. UC problem 441 may then be configured according to the determined configuration and solved in a solution process 440.

Each solution process 440 may solve a respective UC problem 441 by generating one or more original UC models 442, one or more restricted UC models 443, and/or one or more relaxed UC models 444. Each of original UC model(s) 442, restricted UC model(s) 443, and/or relaxed UC model(s) 444 may comprise one or more variables (e.g., weighted variables) whose values can be set by a corresponding solver 445. Each of original UC model(s) 442, restricted UC model(s) 443, and/or relaxed UC model(s) 444 may be a mixed integer programming (MIP) model, such as a mixed integer linear programming (MILP) model or a mixed integer quadratic programming (MIQP) model. In a MILP model, the value of each variable in a feasible solution must be an integer. In a MIQP model, the value of at least one variable in a feasible solution is quadratic and any non-quadratic variables have integer values. In any case, each variable may represent a parameter or state of a resource 142 or other component of the respective power system 140 (e.g., whether or not a power generator is turned on or off, whether or not a load is turned on or off, etc.).

It should be understood that original UC model(s) 442, restricted UC model(s) 443, and relaxed UC model(s) 444 represent different variants of UC problem 441. Each original UC model 442 represents an equivalent of the respective UC problem 441 and has a first (i.e., original) solution space. In particular, each original UC model 442 may enable all variables to be changed and may comprise all applicable constraints. It should be understood that the term "original" in this context does not imply temporality. For example, an original UC model 442 may be generated and/or solved before, at the same time, or after a restricted UC model 443 and/or relaxed UC model 444 is generated and/or solved.

Each restricted UC model 443 represents a restricted variant of the respective UC problem 441 and has a second (i.e., restricted) solution space that is smaller than the first solution space. For example, each restricted UC model 443 may incorporate a partial solution to UC problem 441. In particular, the partial solution may comprise the value of each of one or more variables in UC problem 441, and incorporating the partial solution into restricted UC model 443 may comprise fixing the value of each of these variable(s) within restricted UC model 443, such that the value(s) of these variable(s) will not change during solution process 440.

Each relaxed UC model 444 represents a relaxed variant of the respective UC problem 441 and has a third (i.e., relaxed) solution space that is larger than the first solution space, as well as the second solution space. For example, UC problem 441 may comprise one or more constraints. If mixed integer programming is utilized, each of these constraint(s) may be linear. In addition, if mixed integer linear programming is utilized, these constraint(s) may include the constraint that the value of each variable must be an integer. Similarly, if mixed integer quadratic programming is utilized, these constraint(s) may include the constraint that the value of each variable must either be an integer or quadratic. In an embodiment, original UC model(s) 442 and/or restricted UC model(s) 443 are not allowed to violate any of these constraint(s), whereas each relaxed UC model 444 is allowed to violate at least one of the constraint(s). In an embodiment, the constraint(s) which a relaxed UC model 444 is allowed to violate may be removed from that relaxed UC model 444. For instance, the integrality constraint, requiring that the value of each variable must be an integer, may be removed from relaxed UC model 444. Relaxed UC model(s) 444 may be generated using Lagrangian relaxation and/or or other suitable relaxation technique(s). It should be understood that a relaxed UC model 444 may generally be solved more quickly than an original UC model 442 or restricted UC model 443, but will not necessarily produce a feasible solution.

In an embodiment, a plurality of original UC models 442, a plurality of restricted UC models 443, and/or a plurality of relaxed UC models 444 are generated. Original UC model(s) 442, UC restricted UC model(s) 443, and/or relaxed UC model(s) 444 may be generated in any known manner. However, in an embodiment, a model creation ML model 422 is used to generate one or more of original UC model(s) 442, UC restricted UC model(s) 443, and/or relaxed UC model(s) 444. Software 112 may provide the respective UC problem 441 to model creation ML model 422. In particular, software 112 may extract the values of one or more features from UC problem 441. Model creation ML model 422 may be applied to these values to generate a UC model 442, 443, and/or 444.

Prior to being applied, model creation ML model 422 may be trained to generate a UC model 442, 443, and/or 444 based on the feature(s) using supervised learning. For example, during a training phase, model creation ML model 422 may learn to predict models for UC problems 441 based on a training dataset that comprises values for the feature(s), derived from historical data and labeled with the models, derived from UC problems 441, that produced the optimal solution. Model creation ML model 420 may comprise any suitable algorithm, including, for example, a language model, such as a generative language model that generates a mathematical optimization problem, as UC model 442, 443, and/or 444, from a prompt that defines a UC problem 441. In an embodiment, model creation ML model 420 may generate a plurality of UC models 442, 443, and/or 444 in parallel (e.g., from a single prompt).

Each of the plurality of original UC models 442 may have a different initial configuration than each of the other plurality of original UC models 442, each of the plurality of restricted UC models 443 may have a different initial configuration than each of the other plurality of restricted UC models 443, and/or each of the plurality of relaxed UC models 444 may have a different initial configuration than each of the other plurality of relaxed UC models 444. The initial configurations may differ in terms of solver parameters, search strategies, use of heuristics, prioritization of feasibility or optimality, starting solution pool, and/or the like. In addition, the initial configurations for restricted UC models 443 may differ in terms of the partial solutions that are incorporated into the restricted UC models 443. Similarly, the initial configurations for relaxed UC models 444 may differ in terms of the constraint(s) that are removed or otherwise relaxed. More generally, the initial configurations may differ in terms of any parameter that will affect the solving process.

Original UC models 442, restricted UC models 443, and/or relaxed UC models 444 may be solved using a plurality of solvers 445. One or more solvers 445 may be executed in parallel. It should be understood that, as used herein, the term "parallel" does not require that the executions be coextensive in time (although, they may be). In other words, the executions do not have to start and end at the same time. Rather, all that is required for executions to be in parallel is that the execution of one solver 445 overlaps in time, whether at a single point in time or over some time period, with the execution of another solver 445. Using solution process 440A as an example, two or more solvers 445AX for original UC models 442A may be executed in parallel, two or more solvers 445AY for restricted UC models 443A may be executed in parallel, two or more solvers 445AZ for relaxed UC models 443A may be executed in parallel, at least one solver 445AX may be executed in parallel with at least one solver 445AY, at least one solver 445AX may be executed in parallel with at least one solver 445AZ, at least one solver 445AY may be executed in parallel with at least one solver 445AZ, and/or the like.

Alternatively or additionally, two or more solvers 445 may be executed serially. In this case, one solver 445 may not begin executing until after another solver 445 has stopped executing. It should be understood that a first solver 445 could execute in parallel with a second solver 445 while also executing serially with a third solver 445.

Each solver 445 may report its current solution to an upper bound (UB) / lower bound (LB) server 446. UB/LB server 446 receives the current solution from each solver 445 and determines the current upper bound and the current lower bound of solution process 440. It should be understood that an upper bound may represent the minimum objective value produced by any feasible solution found by one of solvers 445 (e.g., solvers 445AX and/or 445AY), and the lower bound may represent the maximum objective value produced by any relaxed solution found by one of solvers 445 (e.g., solvers 445AZ). It is generally contemplated that, in an embodiment in which the objective value is to be minimized, the upper bound will be determined from solutions for original UC model(s) 442 and/or restricted UC model(s) 443, and the lower bound will be determined from solutions for relaxed model(s) 444. However, in an alternative embodiment, the upper bound could additionally be determined from solutions for relaxed model(s) 444 and/or the lower bound could additionally be determined from solutions for original UC model(s) 442 and/or restricted UC model(s) 443.

UB/LB server 446 monitors the difference between the current upper bound and the current lower bound of the solutions produced during solution process 440. For example, UB/LB server 446 may periodically calculate the difference between the most recent upper bound and the most recent lower bound. When this difference satisfies a threshold, the respective solution process 440 may be stopped, and the UC solution 447 may be output. For instance, when the difference falls below a threshold value, software 112 may stop solution process 440 and output UC solution 447. UC solution 447 may be, or may otherwise be derived from, the solution whose objective value represents the most recent upper bound. Because the upper bound is derived from solutions to original UC model(s) 442 and restricted UC model(s) 443, which are constrained by the constraint(s) of UC problem 441, UC solution 447 will be a feasible solution. In other words, in an embodiment in which mixed integer programming is used, UC solution 447 may the best (e.g., minimum objective value), feasible, integer solution that was found throughout the entire solution process 440.

As illustrated, there may be a plurality of solution processes 440, each solving a different UC problem 441. For example, solution process 440A solves UC problem 441A, and solution process 440B solves UC problem 441B. It should be understood that there may be any number of UC problems 441 that are each solved by a respective solution process 440, including, one, two, or three or more solution processes 440. More generally, there may be N solution processes 440 (e.g., from solution process 440A to solution process 440N).

In the event that there is a plurality of solution processes 440, two or more solution processes 440 may be executed in parallel. For example, solution process 440B may be executed in parallel with solution process 440A.

Alternatively or additionally, two or more solution processes 440 may be executed serially. In this case, one solution process 440 may not begin executing until after another solution process 440 has stopped executing. It should be understood that a first solution process 440 (e.g., 440A) could execute in parallel with a second solution process 440 (e.g., 440B) while also executing serially with a third solution process 440 (e.g., 440N).

In an embodiment, one UC model may be informed by a solution produced by a solver 445 for another UC model, one solver 445 may be informed by a solution produced by another solver 445, and/or one solution process 440 may be informed by a solution produced by another solution process 440. For example, a solution produced by solver 445AX may inform the initial configuration of a new original UC model 442A, a new restricted UC model 443A (e.g., by providing a partial solution) and/or a new relaxed UC model 444A (e.g., by identifying one or more constraints to be relaxed). As another example, a solution produced by solver 445AX may inform the configuration of another solver 445AX, a solver 445AY, and/or a solver 445AZ. In either case, UB/LB server 446A may configure a new UC model or solver 445 or reconfigure an existing UC model or solver 445 based on a solution produced by a solver 445. For instance, a final UC solution 447 or intermediate UC solution may be provided by UB/LB server 446 to UC setup server 430 to be used to configure a new UC problem 441 within a new solution process 440. In addition, UB/LB server 446 may broadcast information collected from each solver 445 to every other solver 445, such that each solver 445 can benefit from the results produced by other solvers 445.

In the event that a plurality of UC problems 441 is derived from an SCUC problem 410, they may be solved in respective solution processes 440, to produce respective UC solutions 447. These UC solutions 447 may be provided to a solution server 480, which may determine a final SCUC solution 490 to SCUC problem 410. For example, solution process 440A may provide a UC solution 447A to solution server 480, solution process 440B may provide a UC solution 447B to solution server 480, and so on and so forth, and solution server 480 may select one of the received UC solutions 447 as SCUC solution 490.

Each UC solution, whether UC solution 447 for a UC problem 441 or SCUC solution 490 for an SCUC problem 410, may represent a resource allocation schedule for one or more resources of power system 140. In other words, a resource allocation schedule may be generated based on the result of solution process(es) 440. The resource allocation schedule, which may also be referred to as an "operation schedule," may comprise commitment decisions (e.g., whether or not a power generator is online to produce energy at a given time instant), production or dispatch decisions (e.g., how much energy a power generator is producing at a given time instant), controllable network element decisions (e.g., power flows on high-voltage direct-current (HVDC) transmission lines and alternating current (AC) transmission lines with phase angle regulators), and/or the like.

In an embodiment, one or more, and potentially all, of restricted UC model(s) 443 may be generated using a partial solutions ML model 450. In particular, software 112 may extract the values of one or more features from UC problem 441. Partial solutions ML model 450 may be applied to these values to determine a partial solution to UC problem 441. The restricted UC model 443 may then be generated to incorporate the determined partial solution, as discussed elsewhere herein.

Prior to being applied, partial solutions ML model 450 may be trained to determine partial solutions for UC problems based on the feature(s) using supervised learning. For example, during a training phase, partial solutions ML model 450 may learn to predict partial solutions for UC problems based on a training dataset that comprises values for the feature(s), derived from historical data and labeled with partial or full solutions that produced a good objective value. Partial solutions ML model 450 may comprise any suitable algorithm, including, for example, a regression algorithm (e.g., linear or logistic regression), a naive Bayesian algorithm, an artificial neural network, a random forest algorithm, or the like.

In an embodiment, one or more constraints for one or more, and potentially all, of restricted UC model(s) 443 may be generated using a constraint ML model 452. In particular, software 112 may extract the values of one or more features from UC problem 441. Constraint ML model 452 may be applied to these values to determine the constraints or additional constraints to be used in the resulting restricted UC model(s) 443. These constraints may be physical constraints (e.g., network constraints) or non-physical constraints observed from statistical patterns in historical solutions of UC problem 441 (e.g., if generator A is running, generator B is always running as well). The restricted UC model 443 may then be generated to incorporate the determined constraints, as discussed elsewhere herein.

Prior to being applied, constraint ML model 452 may be trained to determine constraints for UC problems based on the feature(s) using supervised learning. For example, during a training phase, constraint ML model 452 may learn to predict constraints for UC problems based on a training dataset that comprises values for the feature(s), derived from historical data and labeled with constraints that produced a good objective value. Constraint ML model 452 may comprise any suitable algorithm, including, for example, a regression algorithm (e.g., linear or logistic regression), a naive Bayesian algorithm, an artificial neural network, a random forest algorithm, or the like.

Constraint ML model 452 may be used in conjunction with partial solutions ML model 450. In a particular embodiment, constraint ML model 452 may be integral with partial solutions ML model 450. For example, partial solutions ML model 450 and constraint ML model 452 may be a single model that is trained to predict both a partial solution and one or more constraints in a single shot.

Although not specifically illustrated, other ML models may be incorporated into architecture 400. For example, similarly to partial solutions ML model 450 and constraint ML model 452, a ML model may be used to predict the integer variables to be relaxed in one or more relaxed UC models 444. As another example, a ML model may be used to predict primal solutions, which may be used to support one or more solution processes 440, during their solving of various parallel UC models 442, 443, and/or 444.

Each solver 445 may utilize a search strategy. In particular, the configuration of each solver 445 may comprise the search strategy for that solver 445. The search strategy may comprise a branch-and-bound algorithm, branch-and-cut algorithm, or the like. The search strategy may be at least partially defined by the value(s) of one or more search parameters. The search parameter(s) may include, without limitation, one or more of a branching strategy, a diving strategy, and/or a cutting strategy. Branching strategy refers to a decision about which branch (e.g., left or right branch) within a search tree, representing the solution space, to search first. Diving strategy refers to a decision about which subspace within the solution space to explore first. Cutting strategy refers to a decision about which portion(s) of the solution space to disregard.

Given the complexity and high dimensionality of SCUC problems 410, significant computational resources and time are required to generate feasible restricted UC models 443. If the restricted UC model 443 is not feasible, there is little to no recourse for finding a solution. Thus, in an embodiment, rather than predicting the commitment status of resources, the probability of the commitment status may be predicted. In other words, one or more of the search parameters may define a probability for a branching, diving, and/or cutting strategy. In particular, a search parameter may define the probability that a solver 445 should implement a particular strategy (e.g., which variable to branch on in a branch-and-bound algorithm, which subspace to dive into first, etc.). This improves the probability of finding feasible and better solutions faster. As an example, a search parameter may specify that a branching strategy, in which the left branch is always searched first, should be implemented 80% of the time. In this case, when solver 445 must make a branching decision, solver 445 will do so probabilistically, such that it will decide to search the left branch first about 80% of the time over the entire search.

In an embodiment, one or more of these search parameters may be determined by a search strategy ML model 460. In particular, software 112 may extract the values of one or more features from UC problem 441. Search strategy ML model 460 may be applied to these values to determine the values of the search parameter(s). For example, the output of search strategy ML model 460 may be the probability value that should be applied to a branching, diving, and/or cutting decision. This probability value represents the probability that the given decision is on a path to the final optimal solution.

The values of the search parameter(s), output by search strategy ML model 460, may be provided to a search strategy advisor 470. Solvers 445 may rely on search strategy advisor 470 when configuring or applying a search strategy. In other words, search strategy advisor 470 guides solvers 445 (e.g., a branch-and-bound algorithm utilized by solvers 445), based on the output of search strategy ML model 460.

Prior to being applied, search strategy ML model 460 may be trained to determine the values of search parameters for UC problems 441, based on one or more features, using supervised learning. For example, during a training phase, search strategy ML model 460 may learn to predict search parameters for UC problems 441

based on a training dataset that comprises values for the feature(s), derived from historical data and labeled with the values of search parameters that produced a solution with a good objective value. Search strategy ML model 460 may comprise any suitable algorithm, including, for example, a regression algorithm (e.g., linear or logistic regression), a naive Bayesian algorithm, an artificial neural network, a random forest algorithm, or the like.

Architecture 400 is a meta-solver that uses parallel computing to integrate primal solutions, restricted solutions, relaxed or dual solutions, warm-start solutions (e.g., informed by a prior solver 445), and/or machine-learning solutions (e.g., restricted by partial solutions output by partial solutions ML model 450) into solution process(es) 440, to reduce solving time and mitigate dead-end searches. This parallel integration achieves the benefit of opportunistically exploring restricted solution spaces, without the risk of being trapped in a dead-end solution space (i.e., by providing recourse to situations where a restricted solution space cannot provide a feasible solution). The parallel integration enables utilization of information that is easier to learn by a machine (e.g., it is easier to learn the probability a resource is committed in a particular time frame than to learn the commitment schedule of the resource), while providing a forgiving integration process for knowledge generated by machine learning.

### 6. Example SCUC Solution Process

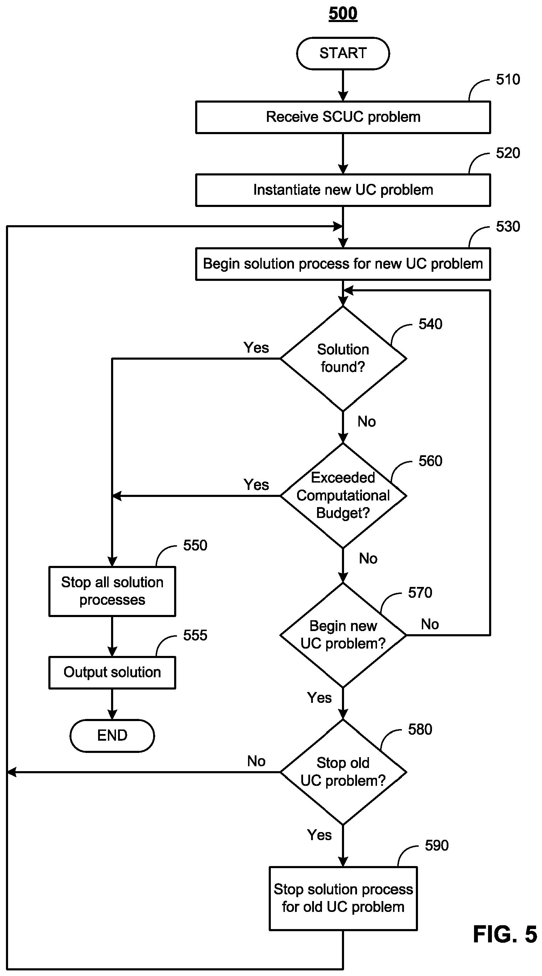

FIG. 5 illustrates a process 500 for solving an SCUC problem 410, or other overarching UC problem that would benefit from solving a plurality of UC problems 441, according to an embodiment. Process 500 may be embodied in one or more software modules that are executed by one or more hardware processors (e.g., processor 210), for example, as software 112. Process 500 may be implemented as instructions represented in source code, object code, and/or machine code. These instructions may be executed directly by hardware processor(s) 210, or alternatively, may be executed by a virtual machine operating between the object code and hardware processor(s) 210.

Alternatively, process 500 may be implemented as a hardware component (e.g., general-purpose processor, integrated circuit (IC), application-specific integrated circuit (ASIC), digital signal processor (DSP), field-programmable gate array (FPGA) or other programmable logic device, discrete gate or transistor logic, etc.), combination of hardware components, or combination of hardware and software components. To clearly illustrate the interchangeability of hardware and software, various illustrative components, blocks, modules, circuits, and steps are described herein generally in terms of their functionality. Whether such functionality is implemented as hardware or software depends upon the particular application and design constraints imposed on the overall system. Skilled persons can implement the described functionality in varying ways for each particular application, but such implementation decisions should not be interpreted as causing a departure from the scope of the invention. In addition, the grouping of functions within a component, block, module, circuit, or step is for ease of description. Specific functions or steps can be moved from one component, block, module, circuit, or step to another without departing from the invention.

Furthermore, while process 500 is illustrated with a certain arrangement and ordering of subprocesses, process 500 may be implemented with fewer, more, or different subprocesses and a different arrangement and/or ordering of subprocesses. In addition, it should be understood that any subprocess, which does not depend on the completion of another subprocess, may be executed before, after, and/or in parallel with that other independent subprocess, even if the subprocesses are described or illustrated in a particular order.

Initially, in subprocess 510, an SCUC problem 410 may be received. SCUC problem 410 may represent an optimization function for resource allocation scheduling in a future time window, referred to herein as the "scheduling window." The scheduling window may be a sliding time window that starts at the current time or at some future time, delayed from the current time by a predetermined time period. In this case, SCUC problem 410 may be solved in real time, as the time window slides. Alternatively, the scheduling window may be a fixed time window that encompasses a fixed time period in the future, such as the next hour, the next day, the next week, or the like. In this case, SCUC problem 410 may be solved at a predetermined time or any other time in advance of the scheduling window.

Typically, an SCUC problem 410 is formulated as a sequence of large-scale MILP optimization problems. However, the solution to such an optimization problem does not scale well, even when solved with state-of-the-art branch-and-bound or branch-and-cut MIP solvers. Accordingly, in an embodiment, SCUC problem 410 is formulated as a sequence of UC problems 441 that can be executed in sequential and/or parallel solution processes 440, which may each comprise a plurality of solvers 445 executing one or more original UC models 442, restricted UC models 443, and/or relaxed UC models 444 sequentially and/or in parallel.

In subprocess 520, a new UC problem 441 is instantiated by UC setup server 430. In the first iteration of subprocess 520, a first UC problem 441 (e.g., 441A) may be instantiated. In an embodiment, this first UC problem 441 is instantiated with no network constraints. However, additional UC problems 441 (e.g., 441B through 441N) that are instantiated in subsequent iterations of subprocess 520 may be instantiated with network constraints. In other words, the subsequent UC problems 441 are NCUCs.

In subprocess 530, a solution process 440 is begun for the UC problem 441 that was most recently instantiated in subprocess 520. In particular, one or more original UC models 442, restricted UC models 443, and/or relaxed UC models 444 may be generated and solved by a plurality of solvers 445. Solvers 445 each communicate with a UB/LB server 446, which will monitor the difference between the upper and lower bounds of solutions, and identify a UC solution 447 when the upper and lower bounds converge (e.g., the difference between the upper and lower bounds falls below a predefined threshold).

In subprocess 540, process 500 determines whether or not an SCUC solution 490 has been found. Solution server 480 may determine whether or not any of the UC solutions 447 produced by ongoing and/or completed solution process(es) 440 represent a final solution to SCUC problem 410 by determining whether or not there is a UC solution 447 that satisfies one or more criteria. If a UC solution 447 satisfies the one or more criteria, the UC solution 447 may be selected as the SCUC solution 490. If more than one UC solution 447 satisfies the one or more criteria, the UC solution 447 with the minimum objective value, from among those that satisfy the one or more criteria, may be selected as the SCUC solution 490, or some other selection technique may be used. In a preferred embodiment, the SCUC solution 490 may be taken from the last solution process 440 to be started (e.g., 440N), since this solution process 440 may be guided by information from all preceding solution processes 440 (e.g., 440A, 440B, etc.). When an SCUC solution 490 has been found (i.e., "Yes" in subprocess 540), process 500 may stop all ongoing solution process(es) 440 in subprocess 550, output SCUC solution 490 in subprocess 555, and then end. The output SCUC solution 490 may represent a resource allocation schedule that may be used to control one or more resources 142 (e.g., power generators) in power system 140 during the scheduled time period or time horizon represented by the current scheduling window. Otherwise, if an SCUC solution 490 has not yet been found (i.e., "No" in subprocess 540), process 500 may proceed to subprocess 560.

In subprocess 560, process 500 determines whether or not a computational budget, set for SCUC problem 410, has been exceeded. The computational budget may comprise a total runtime, an amount of processor time, a number of processors, an amount of memory, a number of parallel solution processes 440, and/or the like. If the computational budget has been exceeded (i.e., "Yes" in subprocess 540), process 500 may stop all ongoing solution process(es) 440 in subprocess 550, output the best feasible SCUC solution 490 (e.g., the integer solution with the minimum objective value) in subprocess 555, and then end. Otherwise, if the computational budget has not yet been exceeded (i.e., "No" in subprocess 540), process 500 may proceed to subprocess 570.

In subprocess 570, process 500 may determine whether or not to begin a new UC problem 441. In particular, the solution process(es) 440 for any UC problems 441 currently being solved will generate information that can be used to setup a new UC problem 441. For example, a first solution process 440A may generate enough information to setup a second UC problem 441B. UC setup server 430 may monitor the information generated by ongoing solution process(es) 440, and determine to begin a new UC problem 441 as soon as there is sufficient information. When determining to begin a new UC problem 441 (i.e., "Yes" in subprocess 570), process 500 may proceed to subprocess 580. Otherwise, when determining not to begin a new UC problem 441 (i.e., "No" in subprocess 570), process 500 may return to subprocess 540 to continue monitoring whether or not an SCUC solution 490 has been found.

In subprocess 580, process 500 may determine whether or not to stop an old UC problem 441 that is currently the subject of an ongoing solution process 440. For example, when determining to begin a new UC problem 441B, subprocess 580 may determine whether or not to stop the solution process 440A that generated the information for the setup of UC problem 441B. In some cases, an old UC problem 441 may continue to generate useful information for the setup of future UC problems 441. In other cases, the old UC problem 441 should be stopped to conserve computational resources. When determining to stop the old UC problem 441 (i.e., "Yes" in subprocess 580), process 500 may stop solution process 440 for the old UC problem 441 in subprocess 590, and return to subprocess 520 to instantiate the new UC problem 441. Otherwise, when determining not to stop the old UC problem 441 (i.e., "No" in subprocess 580), process 500 may return to subprocess 520 to instantiate the new UC problem 441.

In an alternative embodiment, the old UC problem 441 may always be stopped. In this case, subprocess 580 may be omitted, such that process 500 always proceeds from "Yes" in subprocess 570 to subprocess 590. In yet another alternative embodiment, the old UC problem 441 may never be stopped. In this case, subprocesses 580 and 590 may be omitted, such that process 500 always proceeds from "Yes" in subprocess 570 directly to subprocess 530. However, in this latter case, there should be some mechanism for stopping solution processes 440 that are no longer generating useful solutions or other information. For example, in such an embodiment or in any embodiment, UC setup server 430 may monitor solution processes 440 and determine when to terminate each solution process 440.

### 7. Example Solution Process

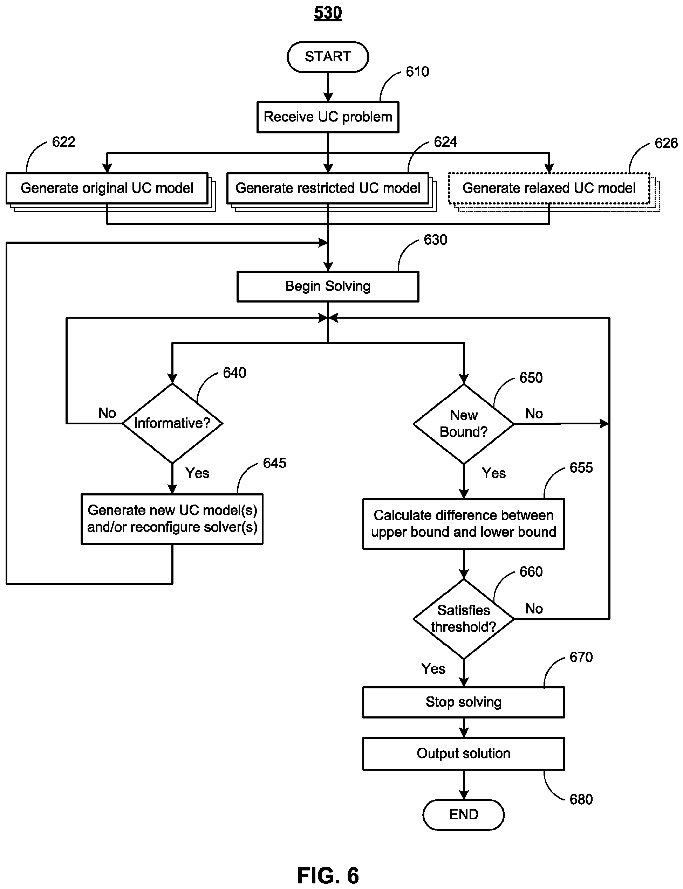

FIG. 6 illustrates an example of subprocess 530 for solving a UC problem, according to an embodiment. While it is generally contemplated that subprocess 530 would be performed within process 500, subprocess 530 could instead be performed as a stand-alone solution process. It should be understood that each iteration of process 530 corresponds to one solution process 440.

Initially, in subprocess 610, a new UC problem 441 is received. It should be understood that the received UC problem 441 may be the UC problem 441 that was instantiated in subprocess 520. Next, one or any combination of subprocesses 622, 624, and/or 626 is performed.

In subprocess 622, one or more original UC models 442 may be generated. For example, a single original UC model 442 may be generated. Alternatively, a plurality of original UC models 442 may be generated. In this case, each of the plurality of original UC models 442 may be generated with an initial configuration that is different from the initial configuration of each of the other plurality of original UC models 442, such that different original UC models 442 follow different convergence paths. Each original UC model 442 has a first solution space.

In subprocess 624, one or more restricted UC models 443 may be generated. For example, a single restricted UC model 443 may be generated. Alternatively, a plurality of restricted UC models 443 may be generated. In this case, each of the plurality of restricted UC models 443 may be generated with an initial configuration that is different from the initial configuration of each of the other plurality of restricted UC models 443, such that different restricted UC models 443 follow different convergence paths. Each restricted UC model 443 has a second solution space that is smaller than the first solution space. The solution space of each restricted UC model 443 may be different (e.g., smaller or larger, overlapping or nonoverlapping, etc.) than the solution space of one or more other restricted UC models 443. As discussed elsewhere herein, each restricted UC model 443 may be generated to incorporate a partial solution, for example, as determined by partial solutions ML model 450.

In subprocess 626, one or more relaxed UC models 444 may be generated. For example, a single relaxed UC model 444 may be generated. Alternatively, a plurality of relaxed UC models 444 may be generated. In this case, each of the plurality of relaxed UC models 444 may be generated with an initial configuration that is different from the initial configuration of each of the other plurality of relaxed UC models 444, such that different relaxed UC models 444 follow different convergence paths. Each relaxed UC model 444 has a third solution space that is larger than the first solution space and the second solution space. The solution space of each relaxed UC model 444 may be different (e.g., smaller or larger, overlapping or nonoverlapping, etc.) than the solution space of one or more other relaxed UC models 443.

In subprocess 630, process 530 may begin solving each original UC model 442, restricted UC model 443, and/or relaxed UC model 444 that was previously generated. In particular, each of these UC model(s) may be input to a solver 445. As discussed elsewhere herein, each solver 445 may be informed by UB/LB server 446 and/or search strategy advisor 470. For example, the information may be used to define one or more search parameters of the search strategy used by solver 445. One or more solvers 445 may be executed in parallel. For instance, the execution of at least one solver 445 may overlap in time with the execution of another solver 445.

During the solving, UB/LB server 446 may receive information from solver(s) 445, including the objective values output by solver(s) 445. In subprocess 670, it may be determined whether or not this information is informative. In this context, the information is informative if it can be used to refine a search space or a search strategy, to thereby increase the likelihood or speed of finding a final UC solution 447. When the information is informative (i.e., "Yes" in subprocess 640), one or more new original UC models 442, restricted UC models 443, and/or relaxed UC models 444 may be generated and/or one or more solvers 445 may be reconfigured (e.g., to implement different values for one or more search parameters), in subprocess 645. Then, solving may begin on these new models 442, 443, and/or 444, and/or with the reconfigured solvers 445. Otherwise, when the information is not informative (i.e., "No" in subprocess 640), process 530 continues to wait for information in subprocess 640.

In subprocess 650, UB/LB server 446 may determine whether or not a new objective value, output by a solver 445, represents a new bound. For example, UB/LB server 446 may store the minimum objective value, found by a solver 445 for an original UC model 442 or restricted UC model 443, as the upper bound. In addition, UB/LB server 446 may store the maximum objective value, found by a solver 445 for a relaxed UC model 444, as the lower bound. Thus, when a new objective value is received, from a solver 445 for an original UC model 442 or restricted UC model 443, that is lower than the upper bound, the upper bound may be replaced with the new objective value. Similarly, when a new objective value is received, from a solver 445 for a relaxed UC model 444, that is lower than the lower bound, the lower bound may be replaced with the new objective value. When a received objective value represents a change to the upper or lower bound (i.e., "Yes" in subprocess 650), process 530 proceeds to subprocess 655. Otherwise, as long as there is no change to the upper or lower bound (i.e., "No" in subprocess 650), process 530 continues to wait for a new bound in subprocess 650.

In subprocess 655, the difference between the upper bound and the lower bound is calculated. For example, the objective value of the solution representing the lower bound may be subtracted from the objective value of the solution representing the upper bound, to obtain the difference.

In subprocess 660, it is determined whether or not the difference, calculated in subprocess 650, satisfies a predefined threshold (e.g., 1% or other percentage of the lower bound). For example, the difference may satisfy the predefined threshold when it is less than or equal to the predefined threshold. In this case, the threshold represents a tolerance (e.g., 1% or other percentage of the lower bound). Within this tolerance, the upper bound and the lower bound are deemed to have converged. When determining that the difference between the upper and lower bounds satisfies the predefined threshold (i.e., "Yes" in subprocess 660), process 530 proceeds to subprocess 670. Otherwise, when determining that the difference between the upper and lower bounds does not satisfy the predefined threshold (i.e., "No" in subprocess 660), process 530 continues to wait for a new bound in subprocess 650.

In subprocess 670, all of the solving is stopped. For example, all solvers 445 that are still executing upon execution of subprocess 670 may be stopped. It should be understood that some solvers 445 may stop before subprocess 670. For example, a solver 445 may stop after finding a feasible solution or after reaching an infeasible or sub-optimal subspace of the solution space, or may be stopped after informing a new UC model, using up a computational budget (e.g., after a exceeding a runtime limit), or for some other reason.

In subprocess 680, a solution is output. In particular, the objective value represented by the upper bound may be output as the UC solution 447 to the UC problem 441 received in subprocess 610. UC solution 447 may represent a resource allocation schedule that may be used to control one or more resources 142 (e.g., power generators) in power system 140 during the scheduled time period or time horizon represented by the current scheduling window.

### 8. Example Time Series

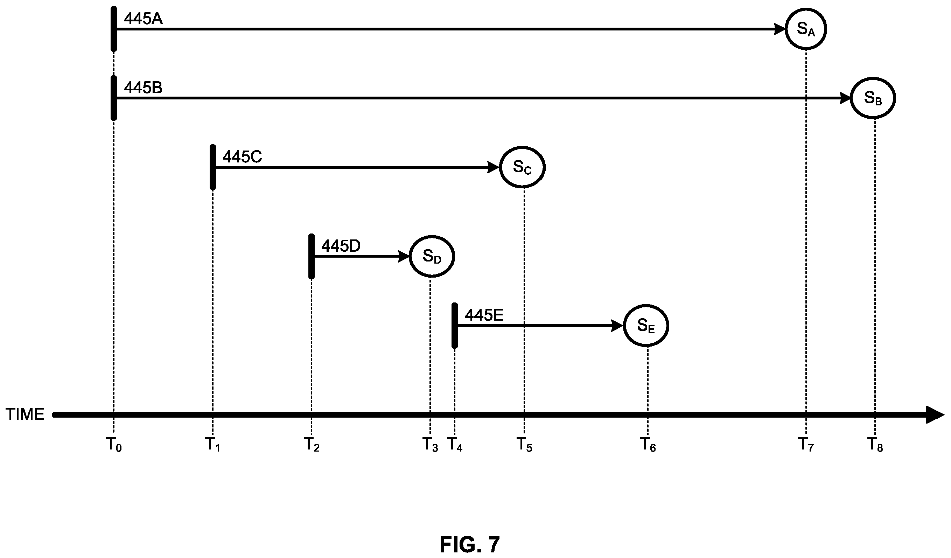

FIG. 7 illustrates an example time series for solving a UC problem 441, according to an embodiment. As illustrated, a plurality of solvers 445 may execute sequentially and/or in parallel.

In this example, two solvers 445A and 445B begin execution in parallel at time T₀ (e.g., corresponding to a first iteration of subprocess 630). Solver 445A may work to solve an original UC model 442, while solver 445B works to solve an original UC model 442 with a different initial configuration, a restricted UC model 443, or a relaxed UC model 444. If left to execute to completion, solver 445A would find a solution S_{A} at time T₇, and solver 445B would find a solution S_{B} at time T8.

At time T₁, a new solver 445C begins executing in parallel with solvers 445A and 445B (e.g., corresponding to a second iteration of subprocess 630). Solver 445C may be informed by information acquired from solvers 445A and/or 445B. If left to execute to completion, solver 445C would find a solution Sc at time T₅.

At time T₂, a new solver 445D begins executing in parallel with solvers 445A, 445B, and 445C (e.g., corresponding to a third iteration of subprocess 630). Solver 445D may be informed by information acquired from solvers 445A, 445B, and/or 445C. If left to execute to completion, solver 445D would find a solution S_{D} at time T₃.

At time T₄, a new solver 445E begins executing in parallel with solvers 445A and 445B (e.g., corresponding to a fourth iteration of subprocess 630), but serially to solver 445D. In this case, solver 445E may be informed by information acquired from solvers 445A, 445B, 445C, and/or 445D. If left to execute to completion, solver 445E would find a solution S_{E} at time T₆.

Each of these solvers 445A-445E may report the objective values of solutions to UB/LB server 446. At some point, the upper bound and the lower bound will be determined to converge (e.g., when the difference falls below a predefined threshold). At this point, any of solvers 445A-445E that are still executing may be stopped. For example, if the upper and lower bounds converge between time T₅ and T₆, solvers 445A, 445B, and 445E may all be stopped, prior to completion, thereby preserving the computational resources that would have been utilized by solvers 445A, 445B, and 445E after the time of the convergence.

### 9. Example Application

One application environment for disclosed embodiments is a market management system for an independent system operator. For example, software 112 of management system 110 may comprise or interface with a clearing engine that runs market scheduling applications to clear an energy market, determine market clearing prices for energy and ancillary services (e.g., reserves and responses), and/or schedule commitment and dispatches for reliability. This clearing engine may solve SCUC problems 410 to provide a resource allocation schedule for power system 140.

The resource allocation schedule may comprise commitment decisions (e.g., whether a resource 142 is online and available to produce energy at each time instant within the scheduling window), product or dispatch decisions (e.g., how much energy a resource 142 is producing at each time instant within the scheduling window), controllable network element decisions (e.g., power flows on HVDC transmission lines and AC transmission lines with phase angle regulators), and/or the like. In an embodiment, the resource allocation schedule is generated by solving the SCUC problem 410, while accounting for operational constraints of power system 140, including the operational constraints of resources 142 (e.g., generation capacity and operating margin, including safe operating ranges), operational constraints of transmission grid 144, market information (e.g., bidding information, cost information, predicted demand, regulatory requirements, such as emission targets, etc.), and/or the like.

The goal of the resource allocation schedule may be to clear market offers and bids, while maximizing the total welfare or minimizing the total cost. In a particular embodiment, the goal of the resource allocation schedule is to satisfy the energy demand in a manner that minimizes energy production costs, subject to the constraints of reliability and emissions. Alternatively, the goal of the resource allocation schedule may be to maximize energy production profits, which may be calculated as the difference between revenues (e.g., from sales of electricity) and costs (e.g., from production of electricity). In this latter case, it should be understood that the SCUC problem 410 would be a maximization problem, instead of a minimization problem.

### 10. Example Embodiments

It would be advantageous to integrate traditional solution techniques (e.g., branch-and-bound, branch-and-cut, relaxation, etc.) with machine learning and heuristic techniques, including Type II heuristics. For example, it would be advantageous to utilize machine learning to setup UC problems, determine partial solutions for restriction, and/or guide search strategies. In addition, it would be advantageous to enable parallel computing to achieve scalability. It would also be advantageous to use information exchange to speed up the optimality proof. For example, it would be advantageous if, during the solution process, there are optimality guarantees on the present solution, which are continuously refined, until the best-known solution (e.g., best integer-feasible solution, represented by the upper bound) is within a tolerance of the best possible solution (e.g., represented by the lower bound).

To better address one or more of these concerns, example embodiments include, without limitation:
Embodiment 1: A method comprising using at least one hardware processor to: execute a solution process comprising generating one or more original mixed integer programming (MIP) models, wherein each of the one or more original MIP models represents an equivalent of a unit commitment (UC) problem for resources in a power system, and wherein the UC problem has a first solution space, generating one or more restricted MIP models, wherein each of the one or more restricted MIP models represents a restricted variant of the UC problem, having a second solution space that is smaller than the first solution space, begin solving the one or more original MIP models and the one or more restricted MIP models using a plurality of solvers, wherein, during the solving, execution of a solver for at least one of the one or more restricted MIP models overlaps in time with execution of a solver for at least one of the one or more original MIP models, monitoring a difference between an upper bound and a lower bound of a plurality of solutions produced during the solving, and when the difference satisfies a threshold, stopping the solving; and generate a resource allocation schedule for one or more of the resources in the power system based on a result of the solution process. Embodiment 1 utilizes parallelism and restricted variants to thereby increase the likelihood of finding the optimal solution faster.
Embodiment 2: The method of Embodiment 1, further comprising using the at least one hardware processor to control the one or more resources in the power system according to the resource allocation schedule. Embodiment 2 enables optimized control of a power system.
Embodiment 3: The method of Embodiment 2, wherein the one or more resources comprise at least one power generator, wherein the resource allocation schedule comprises an amount of power to be output by the at least one power generator for at least one time period, and wherein controlling the one or more resources comprises controlling the at least one power generator to output the amount of power during the at least one time period. Embodiment 3 enables optimized control of a power system.
Embodiment 4: The method of any preceding Embodiment, wherein the one or more original MIP models and the one or more restricted MIP models are mixed integer linear programming (MILP) models. Embodiment 4 facilitates the generation of UC models.
Embodiment 5: The method of any preceding Embodiment, wherein the one or more original MIP models are a plurality of original MIP models, and wherein each of the plurality of original MIP models has a different initial configuration than each of the other plurality of original MIP models, and wherein the one or more restricted MIP models are a plurality of restricted MIP models, and wherein each of the plurality of restricted MIP models has a different initial configuration than each of the other plurality of restricted MIP models. Embodiment 5 utilizes parallelism to thereby increase the likelihood of finding the optimal solution faster.
Embodiment 6: The method of any preceding Embodiment, wherein the solution process further comprises one or more relaxed MIP models, wherein each of the one or more relaxed MIP models represents a relaxed variant of the UC problem, having a third solution space that is larger than the first solution space. Embodiment 6 utilizes parallelism with relaxed variants to thereby increase the likelihood of finding the optimal solution faster.
Embodiment 7: The method of Embodiment 6, wherein the UC problem comprises one or more constraints, and wherein, during solving, a solution for each of the one or more original MIP models is not allowed to violate any of the one or more constraints, but a solution for each of the one or more relaxed MIP models is allowed to violate at least one of the one or more constraints. Embodiment 7 utilizes parallelism with relaxed variants to thereby increase the likelihood of finding the optimal solution faster.
Embodiment 8: The method of either Embodiment 6 or 7, wherein, during the solving, execution of a solver for at least one of the one or more relaxed MIP models overlaps in time with execution of a solver for at least one of the one or more original MIP models or at least one of the one or more restricted MIP models. Embodiment 8 utilizes parallelism to thereby increase the likelihood of finding the optimal solution faster.
Embodiment 9: The method of any one of Embodiments 6 through 8, wherein the upper bound is determined from solutions for the one or more original MIP models and the one or more restricted MIP models, and wherein the lower bound is determined from solutions for the one or more relaxed MIP models. Embodiment 9 utilizes parallelism to thereby increase the likelihood of finding the optimal solution faster.
Embodiment 10: The method of any preceding Embodiment, wherein generating the one or more restricted MIP models comprises, for at least one of the one or more restricted MIP models: extracting values of one or more features from the UC problem; applying a machine-learning model to the values of the one or more features to determine a partial solution to the UC problem; and generating the at least one restricted MIP model to incorporate the partial solution. Embodiment 10 integrates machine learning to seed relaxed variants to thereby increase the likelihood of finding the optimal solution faster.
Embodiment 11: The method of Embodiment 10, further comprising using the at least one hardware processor to, before executing the solution process, training the machine-learning model to determine partial solutions based on the one or more features using supervised learning. Embodiment 11 integrates machine learning to seed relaxed variants to thereby increase the likelihood of finding the optimal solution faster.
Embodiment 12: The method of any preceding Embodiment, further comprising using the at least one hardware processor to: extract values of one or more features from the UC problem; and apply a machine-learning model to the values of the one or more features to determine values of one or more search parameters, wherein at least one of the plurality of solvers utilizes a search strategy at least partially defined by the values of the one or more search parameters. Embodiment 12 integrates machine learning to inform search parameters to thereby increase the likelihood of finding the optimal solution faster.
Embodiment 13: The method of Embodiment 12, further comprising using the at least one hardware processor to, before executing the solution process, training the machine-learning model to determine the one or more search parameters based on the one or more features using supervised learning. Embodiment 13 integrates machine learning to inform search parameters to thereby increase the likelihood of finding the optimal solution faster.
Embodiment 14: The method of either Embodiment 12 or 13, wherein the one or more search parameters indicate at least one of a branching strategy, diving strategy, or cutting strategy. Embodiment 14 integrates machine learning to inform search parameters in order to increase the likelihood of finding the optimal solution faster.
Embodiment 15: The method of Embodiment 14, wherein the one or more search parameters define one or more probabilities for the at least one of the branching strategy, diving strategy, or cutting strategy. Embodiment 15 integrates machine learning to inform search parameters probabilistically in order to increase the likelihood of finding the optimal solution faster.
Embodiment 16: The method of any preceding Embodiment, further comprising using the at least one hardware processor to: receive a security-constrained UC problem; generate a plurality of network-constrained UC problems from the security-constrained UC problem; and execute the solution process for each of the plurality of network-constrained UC problems. Embodiment 16 utilizes parallelism to thereby increase the likelihood of finding the optimal solution of an SCUC problem faster.
Embodiment 17: The method of Embodiment 16, further comprising using the at least one hardware processor to, for at least one of the plurality of network-constrained UC problems: extract values of one or more features from one or both of the security-constrained UC problem or the at least one network-constrained UC problem; apply a machine-learning model to the values of the one or more features to determine a configuration for the at least one network-constrained UC problem; and prior to executing the solution process for the at least one network-constrained UC problem, configure the at least one network-constrained UC problem according to the configuration. Embodiment 17 utilizes machine learning in order to configure UC problems to thereby increase the likelihood of finding the optimal solution of the SCUC problem faster.
Embodiment 18: The method of Embodiment 17, further comprising using the at least one hardware processor to, before executing the solution process for the at least one network-constrained UC problem, training the machine-learning model to determine the configuration based on the one or more features using supervised learning. Embodiment 18 utilizes machine learning in order to configure UC problems to thereby increase the likelihood of finding the optimal solution of the SCUC problem faster.
Embodiment 19: A system comprising: at least one hardware processor; and software configured to, when executed by the at least one hardware processor, perform the method of any one of Embodiments 1 through 18.
Embodiment 20: A non-transitory computer-readable medium having instructions stored thereon, wherein the instructions, when executed by a processor, cause the processor to: perform the method of any one of Embodiments 1 through 18.

The above description of the disclosed embodiments is provided to enable any person skilled in the art to make or use the invention. Various modifications to these embodiments will be readily apparent to those skilled in the art, and the general principles described herein can be applied to other embodiments falling within the scope of the appended claims. Thus, it is to be understood that the description and drawings presented herein represent a presently preferred embodiment of the invention and are therefore representative of the subject matter which is broadly contemplated by the present invention.

As used herein, the terms "comprising," "comprise," and "comprises" are openended. For instance, "A comprises B" means that A may include either: (i) only B; or (ii) B in combination with one or a plurality, and potentially any number, of other components. In contrast, the terms "consisting of," "consist of," and "consists of" are closed-ended. For instance, "A consists of B" means that A only includes B with no other component in the same context.

Combinations, described herein, such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, and any such combination may contain one or more members of its constituents A, B, and/or C. For example, a combination of A and B may comprise one A and multiple B's, multiple A's and one B, or multiple A's and multiple B's.

## Claims

1. A method comprising using at least one hardware processor (210, 260) to:
execute a solution process (440) comprising
generating one or more original mixed integer programming, MIP, models, wherein each of the one or more original MIP models represents an equivalent of a unit commitment, UC, problem for resources (142) in a power system (140), and wherein the UC problem (441) has a first solution space,
generating one or more restricted MIP models, wherein each of the one or more restricted MIP models represents a restricted variant of the UC problem (441), having a second solution space that is smaller than the first solution space,
begin solving the one or more original MIP models and the one or more restricted MIP models using a plurality of solvers (445), wherein, during the solving, execution of a solver (445) for at least one of the one or more restricted MIP models overlaps in time with execution of a solver (445) for at least one of the one or more original MIP models,
extract values of one or more features from the UC problem; and
apply a search strategy machine-learning model (460) to the values of the one or more features to determine values of one or more search parameters, wherein a search parameter defines a probability that the at least one of the plurality of solvers (445) should implement a particular strategy, and
wherein at least one of the plurality of solvers (445) utilizes a search strategy at least partially defined by the values of the one or more search parameters,
monitoring a difference between an upper bound and a lower bound of a plurality of solutions (447) produced during the solving, and
when the difference satisfies a threshold, stopping the solving; and
generate a resource allocation schedule for one or more of the resources (142) in the power system (140) based on a result of the solution process (440).

2. The method of Claim 1, further comprising using the at least one hardware processor (210, 260) to control the one or more resources (142) in the power system according to the resource allocation schedule.

3. The method of Claim 2, wherein the one or more resources (142) comprise at least one power generator, wherein the resource allocation schedule comprises an amount of power to be output by the at least one power generator for at least one time period, and wherein controlling the one or more resources (142) comprises controlling the at least one power generator to output the amount of power during the at least one time period.

4. The method of Claim 1, wherein the one or more original MIP models and the one or more restricted MIP models are mixed integer linear programming, MILP, models.

5. The method of Claim 1,
wherein the one or more original MIP models are a plurality of original MIP models, and wherein each of the plurality of original MIP models has a different initial configuration than each of the other plurality of original MIP models, and
wherein the one or more restricted MIP models are a plurality of restricted MIP models, and wherein each of the plurality of restricted MIP models has a different initial configuration than each of the other plurality of restricted MIP models.

6. The method of Claim 1, wherein the solution process (440) further comprises one or more relaxed MIP models, wherein each of the one or more relaxed MIP models represents a relaxed variant of the UC problem (441), having a third solution space that is larger than the first solution space.

7. The method of Claim 6, wherein the UC problem (441) comprises one or more constraints, and wherein, during solving, a solution (447, 490) for each of the one or more original MIP models is not allowed to violate any of the one or more constraints, but a solution (447, 490) for each of the one or more relaxed MIP models is allowed to violate at least one of the one or more constraints.

8. The method of Claim 6, wherein, during the solving, execution of a solver (445) for at least one of the one or more relaxed MIP models overlaps in time with execution of a solver (445) for at least one of the one or more original MIP models or at least one of the one or more restricted MIP models.

9. The method of Claim 6, wherein the upper bound is determined from solutions (447) for the one or more original MIP models and the one or more restricted MIP models, and wherein the lower bound is determined from solutions (447) for the one or more relaxed MIP models.

10. The method of Claim 1, wherein generating the one or more restricted MIP models comprises, for at least one of the one or more restricted MIP models:
extracting values of one or more features from the UC problem (441);
applying a machine-learning model to the values of the one or more features to determine a partial solution to the UC problem (441); and
generating the at least one restricted MIP model to incorporate the partial solution.

11. The method of Claim 10, further comprising using the at least one hardware processor (210, 260) to, before executing the solution process (440), training the machine-learning model to determine partial solutions (447) based on the one or more features using supervised learning.

12. The method of Claim 1, further comprising using the at least one hardware processor (210, 260) to, before executing the solution process (440), training the machine-learning model to determine the one or more search parameters based on the one or more features using supervised learning.

13. The method of Claim 1, wherein the one or more search parameters indicate at least one of a branching strategy, diving strategy, or cutting strategy.

14. The method of Claim 13, wherein the one or more search parameters define one or more probabilities for the at least one of the branching strategy, diving strategy, or cutting strategy.

15. The method of Claim 1, further comprising using the at least one hardware processor (210, 260) to:
receive a security-constrained UC problem;
generate a plurality of network-constrained UC problems from the security-constrained UC problem; and
execute the solution process (440) for each of the plurality of network-constrained UC problems.

16. The method of Claim 15, further comprising using the at least one hardware processor (210, 260) to, for at least one of the plurality of network-constrained UC problems:
extract values of one or more features from one or both of the security-constrained UC problem or the at least one network-constrained UC problem (441);
apply a machine-learning model to the values of the one or more features to determine a configuration for the at least one network-constrained UC problem (441); and
prior to executing the solution process (440) for the at least one network-constrained UC problem (441), configure the at least one network-constrained UC problem (441) according to the configuration.

17. The method of Claim 16, further comprising using the at least one hardware processor (210, 260) to, before executing the solution process (440) for the at least one network-constrained UC problem (441), training the machine-learning model to determine the configuration based on the one or more features using supervised learning.

18. A system comprising:
at least one hardware processor (210, 260); and
software configured to, when executed by the at least one hardware processor (210, 260), execute a solution process (440) comprising
generating one or more original mixed integer programming, MIP, models, wherein each of the one or more original MIP models represents an equivalent of a unit commitment, UC, problem for resources (142) in a power system (140), and wherein the UC problem (441) has a first solution space,
generating one or more restricted MIP models, wherein each of the one or more restricted MIP models represents a restricted variant of the UC problem (441), having a second solution space that is smaller than the first solution space,
begin solving the one or more original MIP models and the one or more restricted MIP models using a plurality of solvers (445), wherein, during the solving, execution of a solver (445) for at least one of the one or more restricted MIP models overlaps in time with execution of a solver (445) for at least one of the one or more original MIP models,
extract values of one or more features from the UC problem; and
apply a search strategy machine-learning model (460) to the values of the one or more features to determine values of one or more search parameters, wherein a search parameter defines a probability that the at least one of the plurality of solvers (445) should implement a particular strategy, and
wherein at least one of the plurality of solvers (445) utilizes a search strategy at least partially defined by the values of the one or more search parameters,
monitoring a difference between an upper bound and a lower bound of a plurality of solutions (447) produced during the solving, and
when the difference satisfies a threshold, stopping the solving, and
generate a resource allocation schedule for one or more of the resources (142) in the power system (140) based on a result of the solution process (440).

19. A non-transitory computer-readable medium having instructions stored thereon, wherein the instructions, when executed by a processor (210, 260), cause the processor (210, 260) to:
execute a solution process (440) comprising
generating one or more original mixed integer programming, MIP, models, wherein each of the one or more original MIP models represents an equivalent of a unit commitment, UC, problem for resources (142) in a power system (140), and wherein the UC problem (441) has a first solution space,
generating one or more restricted MIP models, wherein each of the one or more restricted MIP models represents a restricted variant of the UC problem (441), having a second solution space that is smaller than the first solution space,
begin solving the one or more original MIP models and the one or more restricted MIP models using a plurality of solvers (445), wherein, during the solving, execution of a solver (445) for at least one of the one or more restricted MIP models overlaps in time with execution of a solver (445) for at least one of the one or more original MIP models,
extract values of one or more features from the UC problem; and
apply a search strategy machine-learning model (460) to the values of the one or more features to determine values of the one or more search parameters, wherein a search parameter defines a probability that the at least one of the plurality of solvers (445) should implement a particular strategy, and
wherein at least one of the plurality of solvers (445) utilizes a search strategy at least partially defined by the values of the one or more search parameters,
monitoring a difference between an upper bound and a lower bound of a plurality of solutions (447) produced during the solving, and
when the difference satisfies a threshold, stopping the solving; and
generate a resource allocation schedule for one or more of the resources (142) in the power system (140) based on a result of the solution process (440).

## Patentansprüche

1. Ein Verfahren, aufweisend ein Verwenden mindestens eines Hardwareprozessors (210, 260) zum:
Ausführen eines Auflösungsprozesses (440), aufweisend Erzeugen eines ursprünglichen Mixed Integer Programming(MIP)-Modells oder mehrerer ursprünglicher Mixed Integer Programming(MIP)-Modelle, wobei jedes des einen ursprünglichen MIP-Modells oder der mehreren ursprünglichen MIP-Modelle ein Äquivalent eines Einheiteneinbindungs(UC)-Problems für Ressourcen (142) in einem Leistungssystem (140) darstellt und wobei das UC-Problem (441) einen ersten Lösungsraum aufweist,
Erzeugen eines eingeschränkten MIP-Modells oder mehrerer eingeschränkter MIP-Modelle, wobei jedes des einen eingeschränkten MIP-Modells oder der mehreren eingeschränkten MIP-Modelle eine eingeschränkte Variante des UC-Problems (441), das einen zweiten Lösungsraum aufweist, der kleiner als der erste Lösungsraum ist, darstellt,
Beginnen des Auflösens des einen ursprünglichen MIP-Modells oder der mehreren ursprünglichen MIP-Modelle und des einen eingeschränkten MIP-Modells oder der mehreren eingeschränkten MIP-Modelle unter Verwendung mehrerer Auflöser (445), wobei, während des Auflösens, die Ausführung eines Auflösers (445) für mindestens eines des einen eingeschränkten MIP-Modells oder der mehreren eingeschränkten MIP-Modelle zeitlich mit der Ausführung eines Auflösers (445) für mindestens eines des einen ursprünglichen MIP-Modells oder der mehreren ursprünglichen MIP-Modelle überlappt,
Extrahieren von Werten eines Merkmals oder mehrerer Merkmale aus dem UC-Problem und
Anwenden eines Suchstrategie-Maschinenlernmodells (460) auf die Werte des einen Merkmals oder der mehreren Merkmale, um Werte eines oder mehrerer Suchparameter(s) zu bestimmen, wobei ein Suchparameter eine Wahrscheinlichkeit definiert, dass der mindestens eine der mehreren Auflöser (445) eine bestimmte Strategie implementieren sollte, und
wobei mindestens einer der mehreren Auflöser (445) eine Suchstrategie nutzt, die mindestens teilweise durch die Werte des einen oder der mehreren Suchparameter(s) definiert ist,
Überwachen einer Differenz zwischen einer Obergrenze und einer Untergrenze mehrerer Lösungen (447), die während des Auflösens erzeugt werden, und
wenn die Differenz einen Schwellenwert erfüllt, Stoppen des Auflösens; und
Erzeugen eines Ressourcenzuordnungsplans für eine oder mehrere der Ressourcen (142) in dem Leistungssystem (140) basierend auf einem Ergebnis des Auflösungsprozesses (440).

2. Das Verfahren nach Anspruch 1, ferner aufweisend ein Verwenden des mindestens einen Hardwareprozessors (210, 260), um die eine oder die mehreren Ressource(n) (142) im Leistungssystem gemäß dem Ressourcenzuordnungsplan zu steuern.

3. Das Verfahren nach Anspruch 2, wobei die eine oder die mehreren Ressource(n) (142) mindestens einen Leistungsgenerator aufweist/aufweisen, wobei der Ressourcenzuordnungsplan eine Leistungsmenge aufweist, die durch den mindestens einen Leistungsgenerator für mindestens eine Zeitperiode auszugeben ist, und wobei das Steuern der einen oder der mehreren Ressource(n) (142) ein Steuern des mindestens einen Leistungsgenerators aufweist, um die Leistungsmenge während der mindestens einen Zeitperiode auszugeben.

4. Das Verfahren nach Anspruch 1, wobei das eine ursprüngliche MIP-Modell oder die mehreren ursprünglichen MIP-Modelle und das eine eingeschränkte MIP-Modell oder die mehreren eingeschränkten MIP-Modelle Mixed Integer Linear Programming(MILP)-Modelle sind.

5. Das Verfahren nach Anspruch 1,
wobei das eine ursprüngliche MIP-Modell oder die mehreren ursprünglichen MIP-Modelle mehrere ursprüngliche MIP-Modelle sind und wobei jedes der mehreren ursprünglichen MIP-Modelle eine andere Anfangskonfiguration als jedes der anderen mehreren ursprünglichen MIP-Modelle aufweist und
wobei das eine eingeschränkte MIP-Modell oder die mehreren eingeschränkten MIP-Modelle mehrere eingeschränkte MIP-Modelle sind und wobei jedes der mehreren eingeschränkten MIP-Modelle eine andere Anfangskonfiguration als jedes der anderen mehreren eingeschränkten MIP-Modelle aufweist.

6. Das Verfahren nach Anspruch 1, wobei der Auflösungsprozess (440) ferner ein entspanntes MIP-Modell oder mehrere entspannte MIP-Modelle aufweist, wobei jedes des einen entspannten MIP-Modells oder der mehreren entspannten MIP-Modelle eine entspannte Variante des UC-Problems (441), das einen dritten Lösungsraum aufweist, der größer als der erste Lösungsraum ist, darstellt.

7. Das Verfahren nach Anspruch 6, wobei das UC-Problem (441) eine oder mehrere Beschränkung(en) aufweist und wobei, während des Auflösens, eine Lösung (447, 490) für jedes des einen ursprünglichen MIP-Modells oder der mehreren ursprünglichen MIP-Modelle keine der einen oder der mehreren Beschränkung(en) verletzen darf, aber eine Lösung (447, 490) für jedes des einen entspannten MIP-Modells oder der mehreren entspannten MIP-Modelle mindestens eine der einen oder der mehreren Beschränkung(en) verletzen darf.

8. Das Verfahren nach Anspruch 6, wobei, während des Auflösens, die Ausführung eines Auflösers (445) für mindestens eines des einen entspannten MIP-Modells oder der mehreren entspannten MIP-Modelle zeitlich mit der Ausführung eines Auflösers (445) für mindestens eines des einen ursprünglichen MIP-Modells oder der mehreren ursprünglichen MIP-Modelle oder mindestens eines des einen eingeschränkten MIP-Modells oder der mehreren eingeschränkten MIP-Modelle überlappt.

9. Das Verfahren nach Anspruch 6, wobei die Obergrenze aus Lösungen (447) für das eine ursprüngliche MIP-Modell oder die mehreren ursprünglichen MIP-Modelle und das eine eingeschränkte MIP-Modell oder die mehreren eingeschränkten MIP-Modelle bestimmt wird und wobei die Untergrenze aus Lösungen (447) für das eine entspannte MIP-Modell oder die mehreren entspannten MIP-Modelle bestimmt wird.

10. Das Verfahren nach Anspruch 1, wobei das Erzeugen des einen eingeschränkten MIP-Modells oder der mehreren eingeschränkten MIP-Modelle, für mindestens eines des einen eingeschränkten MIP-Modells oder der mehreren eingeschränkten MIP-Modelle, aufweist:
Extrahieren von Werten eines Merkmals oder mehrerer Merkmale aus dem UC-Problem (441);
Anwenden eines Maschinenlernmodells auf die Werte des einen Merkmals oder der mehreren Merkmale, um eine Teillösung für das UC-Problem (441) zu bestimmen; und
Erzeugen des mindestens einen eingeschränkten MIP-Modells, um die Teillösung einzubeziehen.

11. Das Verfahren nach Anspruch 10, ferner aufweisend ein Verwenden des mindestens einen Hardwareprozessors (210, 260), um, vor dem Ausführen des Auflösungsprozesses (440), das Maschinenlernmodell zu trainieren, um Teillösungen (447) basierend auf dem einen oder den mehreren Merkmal(en) unter Verwendung von überwachtem Lernen zu bestimmen.

12. Das Verfahren nach Anspruch 1, ferner aufweisend ein Verwenden des mindestens einen Hardwareprozessors (210, 260), um, vor dem Ausführen des Auflösungsprozesses (440), das Maschinenlernmodell zu trainieren, um den einen oder die mehreren Suchparameter basierend auf dem einen oder den mehreren Merkmal(en) unter Verwendung von überwachtem Lernen zu bestimmen.

13. Das Verfahren nach Anspruch 1, wobei der eine oder die mehreren Suchparameter mindestens eine Verzweigungsstrategie, eine Tauchstrategie oder eine Schnittstrategie angibt/angeben.

14. Das Verfahren nach Anspruch 13, wobei der eine oder die mehreren Suchparameter eine oder mehrere Wahrscheinlichkeit(en) für die mindestens eine der Verzweigungsstrategie, der Tauchstrategie oder der Schnittstrategie definiert/definieren.

15. Das Verfahren nach Anspruch 1, ferner aufweisend ein Verwenden des mindestens einen Hardwareprozessors (210, 260) zum:
Empfangen eines sicherheitsbeschränkten UC-Problems;
Erzeugen mehrerer netzwerkbeschränkter UC-Probleme aus dem sicherheitsbeschränkten UC-Problem und
Ausführen des Auflösungsprozesses (440) für jedes der mehreren netzwerkbeschränkten UC-Probleme.

16. Das Verfahren nach Anspruch 15, ferner aufweisend ein Verwenden des mindestens einen Hardwareprozessors (210, 260) zum, für mindestens eines der mehreren netzwerkbeschränkten UC-Probleme:
Extrahieren von Werten eines Merkmals oder mehrerer Merkmale aus einem oder beiden von dem sicherheitsbeschränkten UC-Problem oder dem mindestens einen netzwerkbeschränkten UC-Problem (441);
Anwenden eines Maschinenlernmodells auf die Werte des einen Merkmals oder der mehreren Merkmale, um eine Konfiguration für das mindestens eine netzwerkbeschränkte UC-Problem (441) zu bestimmen; und
vor dem Ausführen des Auflösungsprozesses (440) für das mindestens eine netzwerkbeschränkte UC-Problem (441), Konfigurieren des mindestens einen netzwerkbeschränkten UC-Problems (441) gemäß der Konfiguration.

17. Das Verfahren nach Anspruch 16, ferner aufweisend ein Verwenden des mindestens einen Hardwareprozessors (210, 260), um, vor dem Ausführen des Auflösungsprozesses (440) für das mindestens eine netzwerkbeschränkte UC-Problem (441), das Maschinenlernmodell zu trainieren, um die Konfiguration basierend auf dem einen oder den mehreren Merkmal(en) unter Verwendung von überwachtem Lernen zu bestimmen.

18. Ein System, aufweisend:
mindestens einen Hardwareprozessor (210, 260) und
Software, die ausgelegt ist zum, bei Ausführung durch den mindestens einen Hardwareprozessor (210, 260),
Ausführen eines Auflösungsprozesses (440), aufweisend Erzeugen eines ursprünglichen Mixed Integer Programming(MIP)-Modells oder mehrerer ursprünglicher Mixed Integer Programming(MIP)-Modelle, wobei jedes des einen ursprünglichen MIP-Modells oder der mehreren ursprünglichen MIP-Modelle ein Äquivalent eines Einheiteneinbindungs(UC)-Problems für Ressourcen (142) in einem Leistungssystem (140) darstellt und wobei das UC-Problem (441) einen ersten Lösungsraum aufweist,
Erzeugen eines eingeschränkten MIP-Modells oder mehrerer eingeschränkter MIP-Modelle, wobei jedes des einen eingeschränkten MIP-Modells oder der mehreren eingeschränkten MIP-Modelle eine eingeschränkte Variante des UC-Problems (441), das einen zweiten Lösungsraum aufweist, der kleiner als der erste Lösungsraum ist, darstellt,
Beginnen des Auflösens des einen ursprünglichen MIP-Modells oder der mehreren ursprünglichen MIP-Modelle und des einen eingeschränkten MIP-Modells oder der mehreren eingeschränkten MIP-Modelle unter Verwendung mehrerer Auflöser (445), wobei, während des Auflösens, die Ausführung eines Auflösers (445) für mindestens eines des einen eingeschränkten MIP-Modells oder der mehreren eingeschränkten MIP-Modelle zeitlich mit der Ausführung eines Auflösers (445) für mindestens eines des einen ursprünglichen MIP-Modells oder der mehreren ursprünglichen MIP-Modelle überlappt,
Extrahieren von Werten eines Merkmals oder mehrerer Merkmale aus dem UC-Problem und
Anwenden eines Suchstrategie-Maschinenlernmodells (460) auf die Werte des einen Merkmals oder der mehreren Merkmale, um Werte eines oder mehrerer Suchparameter(s) zu bestimmen, wobei ein Suchparameter eine Wahrscheinlichkeit definiert, dass der mindestens eine der mehreren Auflöser (445) eine bestimmte Strategie implementieren sollte, und
wobei mindestens einer der mehreren Auflöser (445) eine Suchstrategie nutzt, die mindestens teilweise durch die Werte des einen oder der mehreren Suchparameter(s) definiert ist,
Überwachen einer Differenz zwischen einer Obergrenze und einer Untergrenze mehrerer Lösungen (447), die während des Auflösens erzeugt werden, und
wenn die Differenz einen Schwellenwert erfüllt, Stoppen des Auflösens und Erzeugen eines Ressourcenzuordnungsplans für eine oder mehrere der Ressourcen (142) in dem Leistungssystem (140) basierend auf einem Ergebnis des Auflösungsprozesses (440).

19. Ein nicht-transitorisches computerlesbares Medium mit darauf gespeicherten Anweisungen, wobei die Anweisungen, bei Ausführung durch einen Prozessor (210, 260), den Prozessor (210, 260) veranlassen zum:
Ausführen eines Auflösungsprozesses (440), aufweisend Erzeugen eines ursprünglichen Mixed Integer Programming(MIP)-Modells oder mehrerer ursprünglicher Mixed Integer Programming(MIP)-Modelle, wobei jedes des einen ursprünglichen MIP-Modells oder der mehreren ursprünglichen MIP-Modelle ein Äquivalent eines Einheiteneinbindungs(UC)-Problems für Ressourcen (142) in einem Leistungssystem (140) darstellt und wobei das UC-Problem (441) einen ersten Lösungsraum aufweist,
Erzeugen eines eingeschränkten MIP-Modells oder mehrerer eingeschränkter MIP-Modelle, wobei jedes des einen eingeschränkten MIP-Modells oder der mehreren eingeschränkten MIP-Modelle eine eingeschränkte Variante des UC-Problems (441), das einen zweiten Lösungsraum aufweist, der kleiner als der erste Lösungsraum ist, darstellt,
Beginnen des Auflösens des einen ursprünglichen MIP-Modells oder der mehreren ursprünglichen MIP-Modelle und des einen eingeschränkten MIP-Modells oder der mehreren eingeschränkten MIP-Modelle unter Verwendung mehrerer Auflöser (445), wobei, während des Auflösens, die Ausführung eines Auflösers (445) für mindestens eines des einen eingeschränkten MIP-Modells oder der mehreren eingeschränkten MIP-Modelle zeitlich mit der Ausführung eines Auflösers (445) für mindestens eines des einen ursprünglichen MIP-Modells oder der mehreren ursprünglichen MIP-Modelle überlappt,
Extrahieren von Werten eines Merkmals oder mehrerer Merkmale aus dem UC-Problem und
Anwenden eines Suchstrategie-Maschinenlernmodells (460) auf die Werte des einen Merkmals oder der mehreren Merkmale, um Werte des einen oder der mehreren Suchparameter(s) zu bestimmen, wobei ein Suchparameter eine Wahrscheinlichkeit definiert, dass der mindestens eine der mehreren Auflöser (445) eine bestimmte Strategie implementieren sollte, und
wobei mindestens einer der mehreren Auflöser (445) eine Suchstrategie nutzt, die mindestens teilweise durch die Werte des einen oder der mehreren Suchparameter(s) definiert ist,
Überwachen einer Differenz zwischen einer Obergrenze und einer Untergrenze mehrerer Lösungen (447), die während des Auflösens erzeugt werden, und
wenn die Differenz einen Schwellenwert erfüllt, Stoppen des Auflösens; und
Erzeugen eines Ressourcenzuordnungsplans für eine oder mehrere der Ressourcen (142) in dem Leistungssystem (140) basierend auf einem Ergebnis des Auflösungsprozesses (440) .

## Revendications

1. Procédé comprenant l'utilisation d'au moins un processeur matériel (210, 260) pour :
exécuter un processus de solution (440) comprenant la génération d'un ou de plusieurs modèles de programmation en nombres entiers mixtes, Mixed Integer Programming MIP, originaux, dans lequel chacun de l'un ou des plusieurs modèles de MIP originaux représente un équivalent d'un problème d'engagement d'unité, Unit Commitment UC, pour des ressources (142) dans un système électrique (140), et dans lequel le problème d'UC (441) a un premier espace de solution,
la génération d'un ou de plusieurs modèles de MIP restreints, dans lequel chacun de l'un ou des plusieurs modèles de MIP restreints représente une variante restreinte du problème d'UC (441), ayant un deuxième espace de solution qui est plus petit que le premier espace de solution,
commencer la résolution de l'un ou des plusieurs modèles de MIP originaux et de l'un ou des plusieurs modèles de MIP restreints en utilisant une pluralité de résolveurs (445), dans lequel, durant la résolution, l'exécution d'un résolveur (445) pour au moins un de l'un ou des plusieurs modèles de MIP restreints chevauche en temps l'exécution d'un résolveur (445) pour au moins un de l'un ou des plusieurs modèles de MIP originaux,
extraire des valeurs d'une ou de plusieurs caractéristiques à partir du problème d'UC ; et
appliquer un modèle d'apprentissage machine de stratégie de recherche (460) aux valeurs de l'une ou des plusieurs caractéristiques pour déterminer des valeurs d'un ou de plusieurs paramètres de recherche, dans lequel un paramètre de recherche définit une probabilité que l'au moins un de la pluralité de résolveurs (445) devrait mettre en œuvre une stratégie particulière, et
dans lequel au moins un de la pluralité de résolveurs (445) utilise une stratégie de recherche au moins partiellement définie par les valeurs de l'un ou des plusieurs paramètres de recherche,
surveiller une différence entre une limite supérieure et une limite inférieure d'une pluralité de solutions (447) produites durant la résolution, et
lorsque la différence satisfait à un seuil, arrêter la résolution ; et
générer une planification d'attribution de ressources pour une ou plusieurs des ressources (142) dans le système électrique (140) sur la base d'un résultat du processus de solution (440).

2. Procédé de la revendication 1, comprenant en outre l'utilisation de l'au moins un processeur matériel (210, 260) pour commander l'un ou les plusieurs ressources (142) dans le système électrique selon la planification d'attribution de ressources.

3. Procédé de la revendication 2, dans lequel l'une ou les plusieurs ressources (142) comprennent au moins un générateur électrique, dans lequel la planification d'attribution de ressources comprend une quantité d'électricité devant être produite par l'au moins un générateur électrique pendant au moins un laps de temps, et dans lequel la commande de l'un ou des plusieurs ressources (142) comprend la commande de l'au moins un générateur électrique pour produire la quantité d'électricité durant l'au moins un laps de temps.

4. Procédé de la revendication 1, dans lequel l'un ou les plusieurs modèles de MIP originaux et l'un ou les plusieurs modèles de MIP restreints sont des modèles de programmation linéaire en nombres entiers mixtes, Mixed Integer Linear Programming MILP.

5. Procédé de la revendication 1,
dans lequel l'un ou les plusieurs modèles de MIP originaux sont une pluralité de modèles de MIP originaux, et dans lequel chacun de la pluralité de modèles de MIP originaux a une configuration initiale différente de celle de chacun de l'autre pluralité de modèles de MIP originaux, et
dans lequel l'un ou les plusieurs modèles de MIP restreints sont une pluralité de modèles de MIP restreints, et dans lequel chacun de la pluralité de modèles de MIP restreints a une configuration initiale différente de celle de chacun de l'autre pluralité de modèles de MIP restreints.

6. Procédé de la revendication 1, dans lequel le processus de solution (440) comprend en outre un ou plusieurs modèles de MIP assouplis, dans lequel chacun de l'un ou des plusieurs modèles de MIP assouplis représente une variante assouplie du problème d'UC (441), ayant un troisième espace de solution qui est plus grand que le premier espace de solution.

7. Procédé de la revendication 6, dans lequel le problème d'UC (441) comprend une ou plusieurs contraintes, et dans lequel, durant la résolution, une solution (447, 490) pour chacun de l'un ou des plusieurs modèles de MIP originaux n'est permise d'enfreindre aucune de l'une ou des plusieurs contraintes, mais une solution (447, 490) pour chacun de l'un ou des plusieurs modèles de MIP assouplis est permise d'enfreindre au moins une de l'une ou des plusieurs contraintes.

8. Procédé de la revendication 6, dans lequel, durant la résolution, l'exécution d'un résolveur (445) pour au moins un de l'un ou des plusieurs modèles de MIP assouplis chevauche en temps l'exécution d'un résolveur (445) pour au moins un de l'un ou des plusieurs modèles de MIP originaux ou au moins un de l'un ou des plusieurs modèles de MIP restreints.

9. Procédé de la revendication 6, dans lequel la limite supérieure est déterminée à partir de solutions (447) pour l'un ou les plusieurs modèles de MIP originaux et l'un ou les plusieurs modèles de MIP restreints, et dans lequel la limite inférieure est déterminées à partir de solutions (447) pour l'un ou les plusieurs modèles de MIP assouplis.

10. Procédé de la revendication 1, dans lequel la génération de l'un ou des plusieurs modèles de MIP restreints comprend, pour au moins un de l'un ou des plusieurs modèles de MIP restreints :
l'extraction de valeurs d'une ou de plusieurs caractéristiques à partir du problème d'UC (441) ;
l'application d'un modèle d'apprentissage machine aux valeurs de l'une ou des plusieurs caractéristiques pour déterminer une solution partielle pour le problème d'UC (441) ; et
la génération de l'au moins un modèle de MIP restreint pour incorporer la solution partielle.

11. Procédé de la revendication 10, comprenant en outre l'utilisation de l'au moins un processeur matériel (210, 260) pour, avant l'exécution du processus de solution (440), entraîner le modèle d'apprentissage machine pour déterminer des solutions partielles (447) sur la base de l'une ou des plusieurs caractéristiques en utilisant un apprentissage supervisé.

12. Procédé de la revendication 1, comprenant en outre l'utilisation de l"au moins un processeur matériel (210, 260) pour, avant l'exécution du processus de solution (440), entraîner le modèle d'apprentissage machine pour déterminer l'un ou les plusieurs paramètres de recherche sur la base de l'une ou des plusieurs caractéristiques en utilisant un apprentissage supervisé.

13. Procédé de la revendication 1, dans lequel l'un ou les plusieurs paramètres de recherche indiquent au moins une stratégie parmi une stratégie de branchement, une stratégie de plongée, ou une stratégie de découpe.

14. Procédé de la revendication 13, dans lequel l'un ou les plusieurs paramètres de recherche définissent une ou plusieurs probabilités pour l'au moins une stratégie parmi la stratégie de branchement, la stratégie de plongée, ou la stratégie de découpe.

15. Procédé de la revendication 1, comprenant en outre l'utilisation de l'au moins un processeur matériel (210, 260) pour :
recevoir un problème d'UC contraint en sécurité ;
générer une pluralité de problèmes d'UC contraints en réseau à partir du problème d'UC contraint en sécurité ; et
exécuter le processus de solution (440) pour chacun de la pluralité de problèmes d'UC contraints en réseau.

16. Procédé de la revendication 15, comprenant en outre l'utilisation de l'au moins un processeur matériel (210, 260) pour, pour au moins un de la pluralité de problèmes d'UC contraints en réseau :
extraire des valeurs d'une ou de plusieurs caractéristiques à partir d'un ou des deux problèmes parmi le problème d'UC contraint en sécurité ou l'au moins un problème d'UC contraint en réseau (441) ;
appliquer un modèle d'apprentissage machine aux valeurs de l'une ou des plusieurs caractéristiques pour déterminer une configuration pour l'au moins un problème d'UC contraint en réseau (441) ; et
avant l'exécution du processus de solution (440) pour l'au moins un problème d'UC contraint en réseau (441), configurer l'au moins un problème d'UC contraint en réseau (441) selon la configuration.

17. Procédé de la revendication 16, comprenant en outre l'utilisation de l'au moins un processeur matériel (210, 260) pour, avant l'exécution du processus de solution (440) pour l'au moins un problème d'UC contraint en réseau (441), entraîner le modèle d'apprentissage machine pour déterminer la configuration sur la base de l'une ou des plusieurs caractéristiques en utilisant un apprentissage supervisé.

18. Système, comprenant :
au moins un processeur matériel (210, 260) ; et
un logiciel configuré pour, lorsqu'il est exécuté par l'au moins un processeur matériel (210, 260),
exécuter un processus de solution (440) comprenant
la génération d'un ou de plusieurs modèles de programmation en nombres entiers mixtes, Mixed Integer Programming MIP, originaux, dans lequel chacun de l'un ou des plusieurs modèles de MIP originaux représente un équivalent d'un problème d'engagement d'unité, Unit Commitment UC, pour des ressources (142) dans un système électrique (140), et dans lequel le problème d'UC (441) a un premier espace de solution,
la génération d'un ou de plusieurs modèles de MIP restreints, dans lequel chacun de l'un ou des plusieurs modèles de MIP restreints représente une variante restreinte du problème d'UC (441), ayant un deuxième espace de solution qui est plus petit que le premier espace de solution,
commencer la résolution de l'un ou des plusieurs modèles de MIP originaux et de l'un ou des plusieurs modèles de MIP restreints en utilisant une pluralité de résolveurs (445), dans lequel, durant la résolution, l'exécution d'un résolveur (445) pour au moins un de l'un ou des plusieurs modèles de MIP restreints chevauche en temps l'exécution d'un résolveur (445) pour au moins un de l'un ou des plusieurs modèles de MIP originaux,
extraire des valeurs d'une ou de plusieurs caractéristiques à partir du problème d'UC ; et
appliquer un modèle d'apprentissage machine de stratégie de recherche (460) aux valeurs de l'une ou des plusieurs caractéristiques pour déterminer des valeurs d'un ou de plusieurs paramètres de recherche, dans lequel un paramètre de recherche définit une probabilité que l'au moins un de la pluralité de résolveurs (445) devrait mettre en œuvre une stratégie particulière, et
dans lequel au moins un de la pluralité de résolveurs (445) utilise une stratégie de recherche au moins partiellement définie par les valeurs de l'un ou des plusieurs paramètres de recherche,
surveiller une différence entre une limite supérieure et une limite inférieure d'une pluralité de solutions (447) produites durant la résolution, et
lorsque la différence satisfait à un seuil, arrêter la résolution, et générer une planification d'attribution de ressources pour une ou plusieurs des ressources (142) dans le système électrique (140) sur la base d'un résultat du processus de solution (440).

19. Support non transitoire lisible par ordinateur ayant des instructions stockées sur celui-ci, dans lequel les instructions, lorsqu'elles sont exécutées par un processeur (210, 260), amènent le processeur (210, 260) à :
exécuter un processus de solution (440) comprenant
la génération d'un ou de plusieurs modèles de programmation en nombres entiers mixtes, Mixed Integer Programming MIP, originaux, dans lequel chacun de l'un ou des plusieurs modèles de MIP originaux représente un équivalent d'un problème d'engagement d'unité, Unit Commitment UC, pour des ressources (142) dans un système électrique (140), et dans lequel le problème d'UC (441) a un premier espace de solution,
la génération d'un ou de plusieurs modèles de MIP restreints, dans lequel chacun de l'un ou des plusieurs modèles de MIP restreints représente une variante restreinte du problème d'UC (441), ayant un deuxième espace de solution qui est plus petit que le premier espace de solution,
commencer la résolution de l'un ou des plusieurs modèles de MIP originaux et de l'un ou des plusieurs modèles de MIP restreints en utilisant une pluralité de résolveurs (445), dans lequel, durant la résolution, l'exécution d'un résolveur (445) pour au moins un de l'un ou des plusieurs modèles de MIP restreints chevauche en temps l'exécution d'un résolveur (445) pour au moins un de l'un ou des plusieurs modèles de MIP originaux,
extraire des valeurs d'une ou de plusieurs caractéristiques à partir du problème d'UC ; et
appliquer un modèle d'apprentissage machine de stratégie de recherche (460) aux valeurs de l'une ou des plusieurs caractéristiques pour déterminer des valeurs de l'un ou des plusieurs paramètres de recherche, dans lequel un paramètre de recherche définit une probabilité que l'au moins un de la pluralité de résolveurs (445) devrait mettre en œuvre une stratégie particulière, et
dans lequel au moins un de la pluralité de résolveurs (445) utilise une stratégie de recherche au moins partiellement définie par les valeurs de l'un ou des plusieurs paramètres de recherche,
surveiller une différence entre une limite supérieure et une limite inférieure d'une pluralité de solutions (447) produites durant la résolution, et
lorsque la différence satisfait à un seuil, arrêter la résolution ; et
générer une planification d'attribution de ressources pour une ou plusieurs des ressources (142) dans le système électrique (140) sur la base d'un résultat du processus de solution (440).
